# EUROPEAN PATENT APPLICATION

(11) **EP 1 852 798 A1**
(43) Date of publication of application: **07.11.2007**
(21) Application number: 07014570.1
(22) Date of filing: 24.12.2003
(51) Int. Cl.: G06F 21/00

(54) **Method and apparatus for providing information and services while preventing illegal use thereof**

(30) Priority: 26.12.2002 JP 2002378302; 08.01.2003 JP 2003002514; 17.12.2003 JP 2003419116
(62) Divisional of application: 03258141.5
(71) Applicant: Ricoh Company, Ltd., Tokyo 143-8555 (JP)
(72) Inventor: Nakamura, Takashi, Yokohama-shi, Kanagawa (JP)
(74) Representative: Leeming, John Gerard

(57) **Abstract**

An information providing apparatus is responsive to a request from a client for providing predetermined information to the client, and includes a part transmitting to the client usage authentication information identifier for usage authentication information according to the predetermined information; and a part identifying, upon receiving the usage authentication information identifier from the client, identifying uniquely a predetermined information identifier.for identifying the predetermined information from said usage authentication information identifier, and providing the predetermined information identified by said predetermined information identifier to the client.

## Description

A present invention relates to an information providing apparatus, an information providing system, a service providing apparatus, an image forming apparatus, an information providing method, a service providing method and an illegal usage preventing method, and, in particular, to an information providing apparatus, an information providing system, an image forming apparatus, an information providing method for providing predetermined information to a client, an illegal usage preventing method for preventing illegal usage of the information providing apparatus, a service providing apparatus, an imager forming apparatus and a service providing method for providing a predetermined service to a client, and an illegal usage preventing method for preventing illegal usage of the service providing apparatus.

Recently, an information providing apparatus which is connected to a client via a network such as the Internet, a LAN, or so, and provides predetermined information to the client in response to a request has been known. As an example of such an information providing apparatus, an image forming apparatus (referred to as a fusion machine, hereinafter) contains, in a single housing, devices providing functions of a printer, a copier, a facsimile, a scanner and so forth'. Such a fusion machine has a display part, a printing part, an image pickup part, and so forth provided therein in the housing, and also, has four types of software for the respective functions of the printer, copier, facsimile and scanner. Then, by selectively activating one of these types of software, the fusion machine acts as approximately one of these devices.

The fusion machine stores documents as an example of information to be provided in a document management database (referred to as a document management DB, hereinafter), for example. The fusion machine responds to a request from the client connected via the network, and provides a document stored in the document management DB.

Conventionally, in such a fusion machine, in case where an image of a designated URL is requested by means of a tag of HTML on a Web page, a request according to a GET method in HTTP (referred to as an HTTP request, hereinafter) is applied for this purpose. Further, conventionally, in the fusion machine, in order to cope with a security issue, a password is set to a document stored in the document management DB in many cases. Therefore, a password authentication process is needed each time when a document is requested.

For example, according to Japanese laid-open patent application No. H10-329935, an art is proposed in which, in order to omit a troublesomeness concerning password authentication process needed for each time of requesting a document for which a password is set, a ticket is used for proving that the document has already passed authentication. In this art, upon receiving a request from a client including the ticket, the authentication of the document for which the authentication has passed is proved.

Similar to the above-mentioned information providing apparatus, a service providing apparatus has also been known which provides a predetermined service to a client upon receiving a request from the client via a network such as the Internet, a LAN or so.

The above-mentioned fusion machine also acts as this service providing apparatus which provides a service such as a printing service, a copying service, a facsimile transmission/receiving service, a scanning service or so, as the function machine is caused to act as an appropriate device of the printer, copier, facsimile or scanner, respectively, these functions being included in the functions of the fusion machine as described above.

In this term, the fusion machine stores documents in the document management DB as mentioned above, and, upon receiving a request from a client via the network, processes the document read out from the document management DB, in a manner according to the request. Also in this case, password authentication process is sometime a troublesome operation for a user of the client. Accordingly, the above-mentioned art of Japanese laid-open patent application No. H11-237969 may also be useful to cope with this issue.

For example, in case of requesting an acquisition of an image of a designated URL by means of a tag of HTML on a Web page as mentioned above, when the above-mentioned HTTP request is used, it is needed to, include request information needed for obtaining the image into the URL as a part. In this case, as the request information can be seen by a browser, a third person can easily obtain this information, and thus, the third person can easily obtain the contents of the image which the client requested. Furthermore, as the request information is recorded as a log in a proxy server, a third person can easily obtain this information from the proxy server.

Accordingly, upon requesting acquisition of an image of a designated URL by means of tag of HTML on a Web page as mentioned above, there is a possibility that the request information including a password is stolen by a third person.

Also, according to the above-mentioned art of Japanese laid-open patent application'No. H11-237969, as the ticket for proving the document having passed authentication is transmitted via the network, there may be a possibility that the information of the ticket is stolen. In case the information of the ticket is stolen, an illegal client may request the document with a use of the stolen information of the ticket. As a method of stealing the ticket, a method of mounting a resident application into a legitimate client by which the information of the ticket is stolen, a method of stealing the information of the ticket in the absence of the legitimate user, or so may be considered. In case where the client can understand the meaning of the ticket, the client can encode the ticket to effectively reduce the possibility that the information of the ticket is illegally used even when it is stolen since it is encoded. However, in case the client has no chance to understand the meaning of the ticket (for example, in case the client is merely a browser or so), there is no chance to encode the ticket.

The present invention has been made to solve this problem, and an object of the present invention is to provide an information providing apparatus, an information providing system, a service providing apparatus, an image forming apparatus, an information providing method, a service providing method and an illegal usage preventing method by which illegal acquisition of information or illegal usage of a service can be effectively prevented.

In order to achieve the object of the present invention, an information providing apparatus according to the present invention responsive to a request from a client for providing predetermined information to the client, includes: a part transmitting to the client a usage authentication information identifier for usage authentication information according to the predetermined information; and a part identifying, upon receiving the usage authentication information identifier from the client, identifying uniquely a predetermined information identifier for identifying the predetermined information from the usage authentication information identifier, and providing the predetermined information thus identified by the predetermined information identifier to the client.

An information providing processing system according to the present invention includes an information providing apparatus providing predetermined information according to a request and an information processing apparatus performing predetermined processing according to the request on the predetermined information, and the information providing apparatus transmits a usage authentication information identifier for usage authentication information to a client according to the predetermined information, and identifies, upon receiving the usage authentication information identifier, uniquely a predetermined information identifier for identifying the predetermined information from the usage authentication information identifier, and provides the predetermined information thus identified by the predetermined information identifier to the client; and the information processing apparatus includes an information processing part which transmits the usage authentication information identifier received from the information providing apparatus to the information providing apparatus, and, thus, obtains the predetermined information identified by the usage authentication information identifier therefrom for performing the predetermined processing on the thus-obtained predetermined information.

An image forming apparatus according to another aspect of the present invention responsive to a request from a client for providing predetermined information to the client, includes: a part transmitting to the client a usage authentication ,information identifier for usage authentication information according to the predetermined information; and a part identifying, upon receiving the usage authentication information identifier from the client, uniquely a predetermined information identifier for identifying the predetermined information from the usage authentication information identifier, and providing the predetermined information thus identified by the predetermined information identifier to the client.

An information providing method according to the present invention for providing, in response to a request from a client, predetermined information to the client, includes the steps of: a) transmitting to the client a usage authentication information identifier for usage authentication information according to the predetermined information; and b) identifying, upon receiving the usage authentication information identifier from the client, uniquely a predetermined information identifier for identifying the predetermined information from the usage authentication information identifier, and providing the predetermined information thus identified by the predetermined information identifier to the client.

An illegal usage preventing method according to the present invention for providing, in response to a request from a client, predetermined information to the client, include the steps of: a) transmitting to the client a usage authentication information identifier for usage authentication information according to the predetermined information; and b) identifying, upon receiving the usage authentication information identifier from the client, uniquely a predetermined information identifier for identifying the predetermined information from the usage authentication information identifier, and stopping to provide information other than the predetermined information thus identified by the predetermined information identifier to the client.

According to the present invention described above, the usage authentication information identifier according to the predetermined information is transmitted to the client, and, upon receiving the usage authentication information identifier from the client, the predetermined information identifier identifying the predetermined information is uniquely determined, and, then, with a use of the thus-obtained predetermined information identifier, the.predetermined information is identified, which is then transmitted to the client.

The above-mentioned usage authentication information identifier may be a random value which is produced as it is needed. Accordingly, according to the present invention, even when the usage authentication information identifier is recorded as a log, no problem occurs. Furthermore, even when the usage authentication information identifier is seen by a third person furtively, it is possible to greatly reduce a possibility that the predetermined information is illegally obtained, by setting an effective time limit to the usage authentication information identifier for example, for a case where the usage authentication information identifier is seen by a third person furtively.

A service providing apparatus according to the present invention responsive to a request from a client for providing a service to the client, includes: a session management part providing a connection for a client identifier of a client with a session identifier of a session established with the client; and a service providing part providing, upon receiving a request from the client including the session identifier, a predetermined service to the client when the session identifier included in the request has the connection with the client identifier of the client which transmitted the request provided by the session management part.

A service providing apparatus according to another aspect of the present invention responsive to a client's request for providing a predetermined service, includes: a service providing part establishes, upon receiving the client's request via a network service providing part, a session with the network service part, and adds to a session management part a session identifier of the session and a client identifier of the client which transmitted the request; the session management part provides a connection between the session identifier of the session established between the network service providing part and the service providing part, and the client identifier of the client; and the network service providing part receives the session identifier from the service providing part, and transmits information including the session identifier to the client; and the service providing part provides, upon receiving a request from the client including the session identifier, the predetermined service to the client when the session identifier included in the request and the client identifier of the client which transmitted the request are provided with a connection in the session management part.

A service providing apparatus according to another aspect of the present invention responsive to a client's request for providing a predetermined service, includes: a first session management part providing a connection between a first session identifier of a first session established between the client and a first service providing part and a client identifier of the client; a second session management part providing a connection between a second session identifier of a second session established between the client and a second service providing part and a client identifier of the client, and also, providing a connection between a third session identifier of a third session established between the first service providing part and the second service providing part and an identifier of the first session management part; the first service providing part makes, upon receiving a request from the client including the first session identifier and usage authentication information for the second service providing part, a request to the second service providing part when the first session identifier included in the request and the client identifier of.the client which transmitted the request are provided with a connection in the first session management part; and the second service providing part provides, upon receiving the request including the third session identifier and the usage authentication from the first service part, the predetermined service to the first service providing part when the third session identifier included in the request and the identifier of the first service providing part which transmitted the request are provided with a connection in the second session management part, and the first service part provides the predetermined service to the client upon receiving the predetermined service from the second service providing part.

An image forming apparatus according to another aspect of the present invention responsive to a client's request for providing a document, includes: a session management part providing a connection between a session identifier of a session established with the client and a client identifier of the client; and a document providing part providing, upon receiving a request from the client including the session identifier, a document to the client when the session identifier included in the request and the client identifier of the client which transmitted the request are provided with a connection in the session management part.

A service providing method according to the present invention for a service providing apparatus responsive to a client's request for providing a predetermined service to the client, includes the steps of: a) producing a session management part providing a connection between a session identifier of a session established with the client and a client identifier of the client; and b) receiving a request from the client including the session identifier and providing the predetermined service to the client when the session identifier included in the request and the client identifier of the client which transmitted the request are provided with a connection in the session management part.

An illegal usage preventing method according to another aspect of the present invention for preventing an illegal usage of a service providing apparatus responsive to a client's request for providing a predetermined service to the client, includes the steps of: a) producing a session management part providing a connection between a session identifier of a session established with the client and a client identifier of the client; and b) receiving a request from the client including the session identifier but stopping provision of the predetermined service to the client unless the session identifier included in the request and the client identifier of the client which transmitted the request are provided with a connection in the session management part.

According to the present invention, the session management part manages the session identifier of the session established with the client and the client identifier of the client for which the session is established with a connection therebetween. Then, when the session identifier included in the request received from the client and the client identifier of the client which transmitted the request are provided with a connection in the session management part, the predetermined service is provided to the client.

Accordingly, according to the present invention, even the session identifier is seen furtively by an illegal client, which then requests for the predetermined service with a use of the thus-furtively-obtained session identifier, spoofing by the illegal client can be effectively prevented since there is no possibility that the session identifier included in the request received from the illegal client and the client identifier of the illegal client are provided with a connection in the session management part.

Thus, according to the present invention, an information providing apparatus, an information providing system, a service providing apparatus, an image forming apparatus, an information providing method, a service providing method and an illegal usage preventing method by which illegal acquisition of information or illegal usage of a service can be effectively prevented can be achieved.

Other objects and further features of the present invention will become more apparent from the following detailed description when read in conjunction with the accompanying drawings:
FIG. 1 illustrates an information providing apparatus in a first embodiment of the present invention;
FIG. 2 shows a sequence diagram of the information providing method in the first embodiment;
FIG. 3 shows a structure of a ticket management DB;
FIG. 4 shows an example of a document display Web page;
FIG. 5 shows a sequence diagram of the information providing method in the first embodiment in case where a plurality of documents are obtained;
FIG. 6 shows another example of the document display Web page;
FIG. 7 illustrates an information providing method according to a second embodiment of the present invention;
FIG. 8 shows a sequence diagram of the information providing method in the second embodiment;
FIG. 9 shows a structure of another example of the ticket management DB;
FIG. 10 illustrates an information providing method according to a third embodiment of the present invention;
FIG. 11 shows a sequence diagram of the information providing method in the third embodiment;
FIG. 12 shows a structure of another example of the ticket management DB;
FIG. 13 illustrates an information providing method according to a fourth embodiment of the present invention;
FIG. 14 shows a structure of an example of a log-in information DB;
FIG. 15 shows a structure of another example of the ticket management DB;
FIG. 16 illustrates an information providing method according to a fifth embodiment of the present invention;
FIG. 17 shows a sequence diagram of the information providing method in the fifth embodiment;
FIG. 18 illustrates an information providing method according to a sixth embodiment of the present invention;
FIG. 19 shows a structure of an example of an HTTP request transmitted in Step S90;
FIG. 20 shows a structure of an example of an HTTP response transmitted in Step S92;
FIG. 21 shows a structure of an example of an HTTP request transmitted in Step S93;
FIG. 22 shows a structure of a ticket ID made to have a meaning such that a document ID can be determined therefrom;
FIG. 23 shows a configuration of a fusion machine in one embodiment of the present invention;
FIG. 24 shows a hardware configuration of the fusion machine in the embodiment of the present invention;
FIG. 25 illustrates a principle of seventh through ninth embodiments of the present invention;
FIG. 26 shows a structure of an example of a session management DB according to the present invention;
FIG. 27 shows a structure of another example of a session management DB according to the present invention;
FIG. 28 shows structures of general examples of Ethernet (registered trademark) frame, IP packet and TCP segment;
FIG. 29 illustrates effective ranges applied when an IP address or a MAC address is selected as client identification information according to the present invention;
FIG. 30 illustrates a service providing method in which a service limitation is provided with a use of the'effective ranges according to the present invention;
FIG. 31 shows a structure of another example of a session management DB according to the present invention in which any one of MAC address, IP address and client ID is used as client identification information;
FIG. 32 shows a configuration of a fusion machine according to another embodiment of the present invention;
FIG. 33 shows a hardware configuration of the fusion machine shown in FIG. 32;
FIG. 34 illustrates a service providing method according to the seventh embodiment of the present invention;
FIG. 35 shows a sequence diagram of the service providing method according to the seventh embodiment of the present invention;
FIG. 36 illustrates a service providing method according to the eighth embodiment of the present invention;
FIG. 37 shows a sequence diagram of the service providing method according to the eighth embodiment of the present invention;
FIG. 38 illustrates a service providing method according to the ninth embodiment of the present invention ;
FIG. 39 shows a sequence diagram of the service providing method according to the ninth embodiment of the present invention;
FIG. 40 shows a sequence diagram in one example in which, in the service providing method according to the ninth embodiment of the present invention, an illegal user makes spoofing for a legitimate user to request a service from a document management service and a printing service; and
FIG. 41 illustrates a variant of the configuration shown in FIG. 29 in which authentication servers are provided for controlling the service limitation put on available service according to the present invention.

Preferred embodiments of the present invention will now be described with reference to drawings. Although a fusion machine is assumed as an example of information providing apparatus or a service providing apparatus according to the present invention, any other type of machine/apparatus can be applied instead as long as it provides predetermined information or predetermined service to a client in response to the client's request.

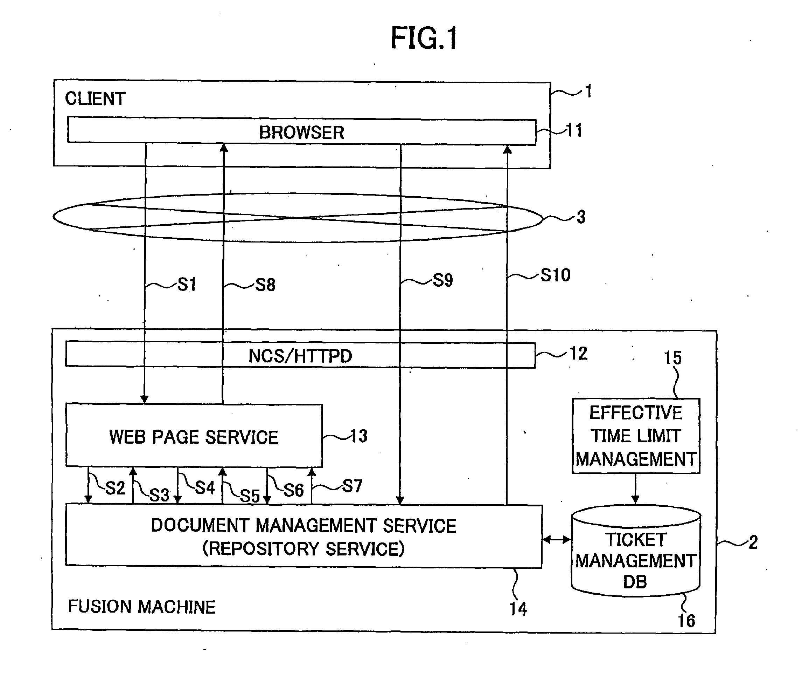

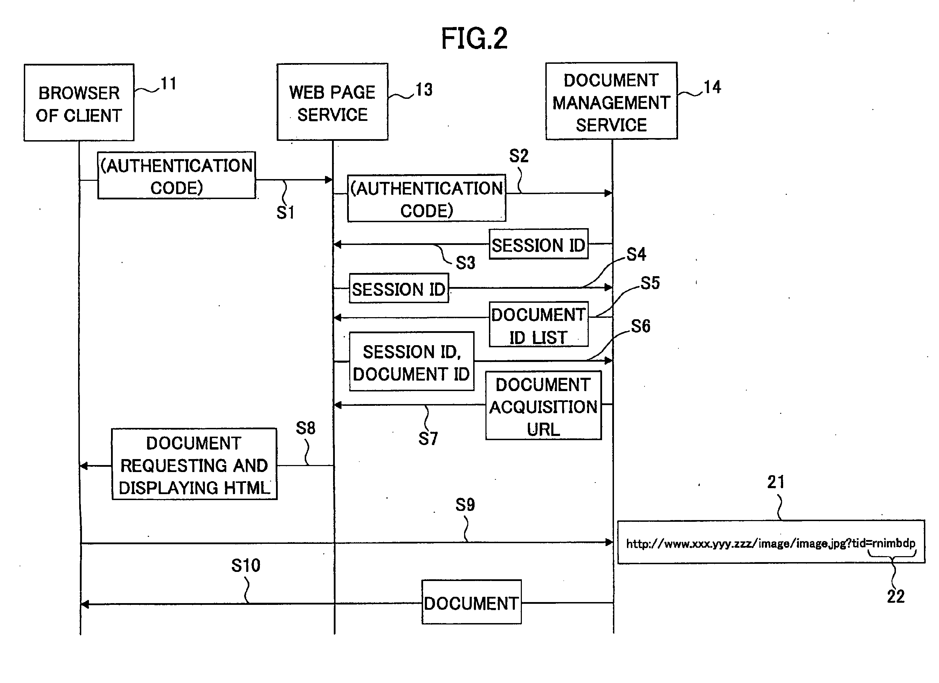

FIG. 1 illustrates an information providing method in a first embodiment of the present invention. FIG. 2 shows a sequence diagram of the information providing method in the first embodiment. The information providing method shown in FIGS. 1 and 2 is a method for a client 1 connected with a fusion machine 2 via a network 3 such as the Internet, a LAN or so, to obtain a document stored in the fusion machine 2.

In case of obtaining a document stored in the fusion machine 2, a user who operates the client 1 inputs an authentication code as one example of a password to a browser 11, and after that, inputs an instruction so as to cause the client 1 to start document acquisition processing.

In Step S1, the browser 11 of the client 1 produces an HTTP request including the authentication code input by the user, and transmits the HTTP request to the fusion machine 2 via the network 3. The HTTP request transmitted by the client 1 is provided to a Web page service 13 via an HTTPD of an NCS 12. The details of the HTTPD will be described later.

In Step S2 following Step S1, the Web page service 13 extracts the authentication code included in the HTTP request, and transmits the authentication code to a document management service 14. The document management service 14 performs password authentication with a use of the authentication code received from the Web page service 13. The document management service 14 may cause an MCS, which will be described later; to execute the password authentication, and then obtain a result thereof. After the password authentication is completed normally, the document management service 14 establishes a session with the Web page service 13, and produces a session ID of the session.

In Step S3 following Step S2, the document management service 14 transmits the thus-produced session ID to the Web page service 13. In Step S4 following Step S3, the Web page service 13 uses the thus-received session ID to request the document management DB of a document ID list. The document ID list is a list of IDs of documents which the document management service 14 can provide.

In response to the request for a document ID list received from the Web page service 13, the document management service 14 produces a document ID list. The document management service 14 may cause the MCS which will be described later to produce the document ID list, and obtain the document ID list therefrom.

In Step S5 following Step S4, the document management service 14 transmits the document ID list to the Web page service 13. In Step S6 following Step S5, the Web page service 13 requests the document management service 14 of a URL (refereed to as a request URL, hereinafter) used by a user to request a document identified by a document ID of document IDs included in the document ID list and the session ID received in Step S3.

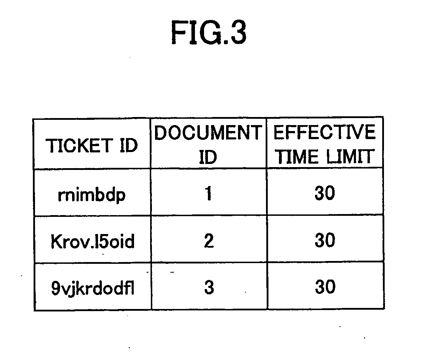

The document management service 14 produces a ticket ID in response to the request for the request URL from the Web page service 13. The document management service 14 stores, in a ticket management DB 16 as shown in FIG. 3, ticket management information providing a connection among the produced ticket ID, document IDs of the available documents and an effective time limit of the ticket ID. FIG. 3 shows an example of a configuration of the ticket management DB 16. The ticket management DB 16 shown in FIG. 3 has data items of ticket ID, document ID and effective time limit as shown.

The document management service 14 responds to the request for the request URL from the Web page service 13, and produces the request URL. In Step S7 following Step S6, the document management service 14 produces the request URL 21 including the ticket ID 22, and transmits the same to the Web page service 13.

For example, in case where the produced ticket ID is 'rnimbdp', and the produced request URL is 'http://www.xxx.yyy.zzz/image/image.jpg', the request URL incorporating the ticket ID becomes 'http://www.xxx.yyy.zzz/image/image.jpg?tid=rnimbdp'.

The request URL incorporating the ticket ID is referred to as an incorporating request URL, hereinafter. After receiving the incorporating request URL from the document management service 14, the Web page service 13 produces a Web page (refereed to as a document display Web page, hereinafter) for the browser 11 to display thereon a document obtained from the document management service 14. The incorporating request URL 21 is incorporated in information such as that of HTML configuring the document display Web page.

In Step S8 following Step S7, the Web page service 13 transmits the produced document display Web page as an HTTP response to the browser 11 of the client 1. The browser 11 extracts the incorporating request URL incorporated in the information configuring the document display Web page when displaying the document display Web page received.

In Step S9 following Step S8, when the user inputs an instruction to the client 1 for a document from the document display Web page displayed, the browser 11 requests the document management service 14 for the document according to the incorporating request URL 21. The document management service 14 extracts the ticket ID 22 incorporated in the incorporating request URL 21, and reads the document ID provided with the connection from this ticket ID 22, from the ticket management DB 16.

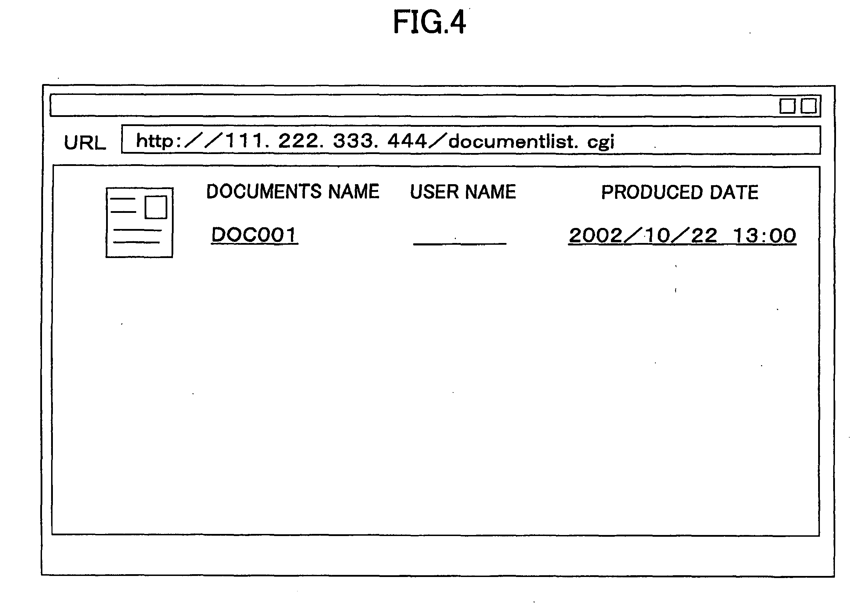

The document management service 14 obtains the document according to the read document ID from a document storage location such as a hard disk device or so. In Step S10 following Step S9, the document management service 14 transmits the thus-obtained document to the browser 11. The browser 11 displays the thus-obtained document on in the document display Web page such as that shown in FIG. 4.

FIG. 4 shows an example of the document display Web page. The document display Web page shown in FIG. 4 shows a document thumbnail, a document name of the document thus obtained in Step S10, and a name of a user who produced the document and a date at which the document was produced.

An effective time limit management part 15 shown in FIG. 1 monitors the data item 'effective time limit' in the ticket management DB 16, and deletes ticket management information for which the effective time limit has expired, from the ticket management DB 16. Accordingly, by previously setting such a time interval within which the process in Steps S7 through S9 can be executed as the effective time limit for the ticket, it is possible to effectively reduce a possibility that the document is illegally obtained even when the URL is seen by a third person furtively. Furthermore, it is possible to reduce a possibility that the document is illegally obtained by a third person even if the incorporating request URL 21 is furtively seen from the third person by providing a configuration such that the document management service 14 deletes the thicket management information already used in Step S9.

Thus, according to the present invention, by utilizing the ticket management information having the appropriate effective time limit set therefor, it is possible to effectively avoid illegal acquisition of the document.

In the above-described method with reference to FIGS. 1 and 2, it is assumed that the client 1 connected with the fusion machine 2 via the network 3 obtains one document stored in the fusion machine 2, as an example. However, a similar way may also be applied also in a case where a plurality of documents are obtained as will now be described.

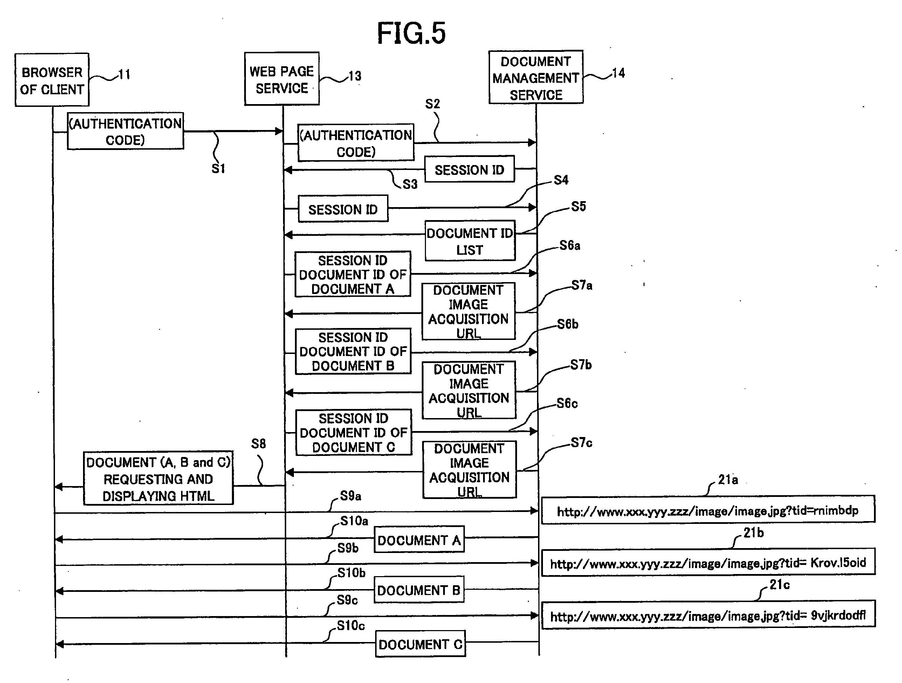

FIG. 5 shows a sequence diagram for a case where a plurality of documents are obtained in the document providing method in the above-described first embodiment of the present invention. The sequence diagram shown in FIG. 5 is same as that shown in FIG. 2 except a part and thus a duplicated description will be omitted.

Processing in Steps S1 through S5 is same as that in the sequence diagram shown in FIG. 2. In Step S5, it is assumed that the received document ID list includes document IDs of documents A, B and C. The Web page service 13 performs Steps S6 and S7 in FIG. 2 for each of the document IDs of the documents A, B and C included in the document ID list.

In FIG. 5, the processing in Steps S6 and S7 for the document ID of the document A is expressed by Steps S6a and S7a, the processing in Steps S6 and S7 for the document ID of the document B is expressed by Steps S6b and S7b, the processing in Steps S6 and S7 for the document ID of the document C is expressed by Steps S6c and S7c.

Thus, the Web page service 13 requests the document management service 14 for request URLs for the respective documents A, B and C through the processing of Steps S6a, S7a, S6b, S7b, and S6c, S7c.

The document management service 14 responds to the requests for the request URLs from the Web page service 13, produces incorporating request URLs 21a, 21b and 21c incorporating ticket IDs, and transmits the same to the Web page service 13.

Upon receiving the incorporating request URLs 21a, 21b and 21c from the document management service 14, the Web page service 13 produces the document display Web page. The incorporating request URLs 21a, 21b and 21c are incorporated in information of HTML or so configuring the document display Web page.

In Step S8, the Web page service 13 transmits the thus-produced document display Web page to the browser 11 of the client 1 as a HTTP response.' The browser 11 extracts the incorporating request URLs incorporated in the information configuring the document display Web page when displaying the received document display Web page.

The browser 11 performs the processing of Steps S9 and S10 in FIG. 2 for each of the incorporating request URLs 21a, 21b and 21c to the document management service 14 in response to the user's instruction for each of the documents A, B and C from the document display Web page displayed on the client 1 to urge the user. In the sequence diagram shown in FIG. 5, the processing of Steps S9 and S10 for the document ID of the document A is expressed by Steps S9a and S10a, the processing of Steps S9 and S10 for the document ID of the document B is expressed by Steps S9b and S10b, the processing of Steps S9 and S10 for the document ID of the document C is expressed by Steps S9c and S10c.

That is, the browser 11 requests the documents according to the incorporating request URLs 21a, 21b and 21c from the document management service 14 through Steps S9a, S10a, S9b, S10b and S9c, S10c.

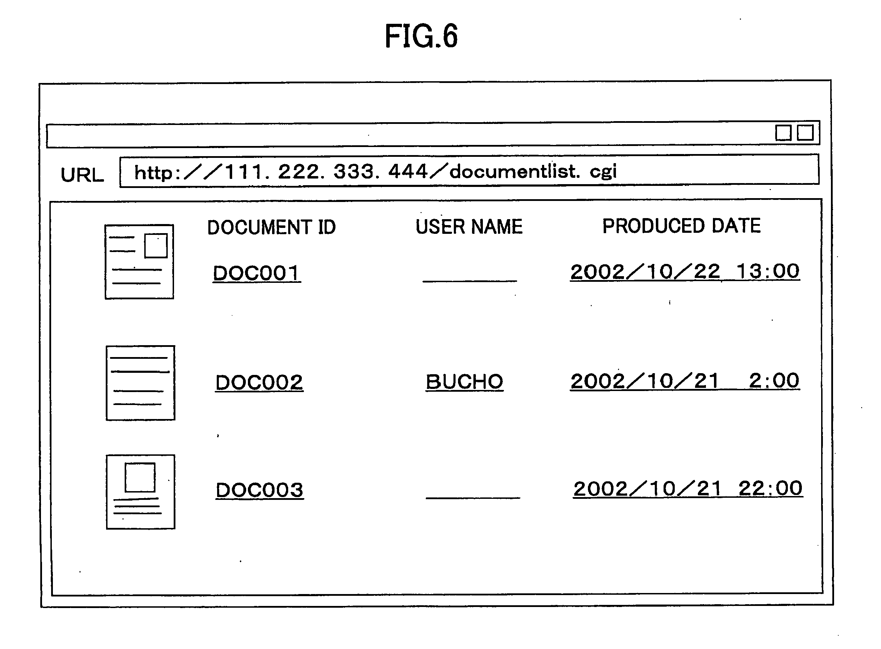

The document management service 14 responds to the request from the browser 11, extracts the ticket IDs incorporated in the incorporating request URLs 21a, 21b and 21c, and transmits the documents provided with connection from these ticket IDs to the browser 11, respectively. The browser 11 displays the thus-obtained documents in the document display Web page as shown in FIG. 6 on the screen of the client 1.

FIG. 6 shows another example of the document display Web page. The document display Web page shown in FIG. 6 shows document thumbnails, document names of the documents thus obtained in Steps S10a, S10b and S10c, and names of users who produced the documents and dates at which the documents were produced.

Thus, according to the present invention, the document display Web page is produced for the plurality of documents, and is displayed on the screen of the client 1 by the browser 11.

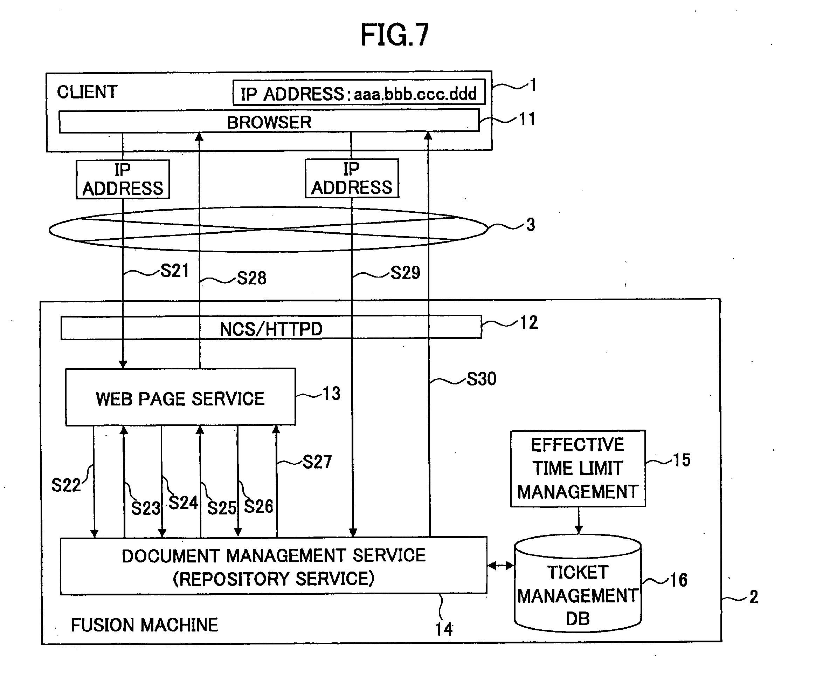

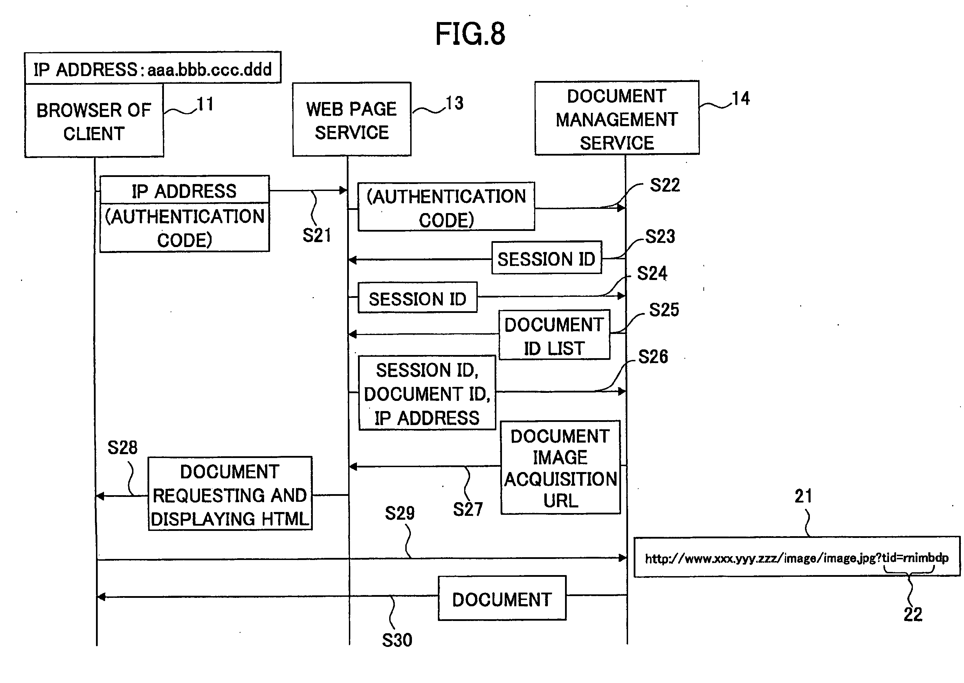

A second embodiment of the present invention will now be descried. FIG. 7 illustrates an information providing method in the second embodiment. FIG. 8 shows a sequence diagram of the information providing method in the second embodiment. As the information providing method shown in FIGS. 7 and 8 is same as that shown in FIGS. 1 and 2 except a part, duplicated description will be omitted.

In case of requesting acquisition of a document stored in the fusion machine 2, the user who operates the client 1 inputs an authentication code as an example of a password to the browser 11, and, then, inputs an instruction to cause the client 1 to start a document acquisition process.

In Step S21, the browser 11 of the client 1 produces an HTTP request including the authentication code input by the user, and transmits the HTTP request to the fusion machine 2 via the network 3. At this time, the browser 11 transmits client identification information (for example, an IP address, a MAC address or so of the client) for identifying the client to the fusion machine 2 together with the.HTTP request. The HTTP request and client identification information sent from the client 1 are provided to the Web page service 13 via the HTTPD of the NCS 1. Details of the HTTPD will be described later.

Processing of Steps S22 through S25 is same as that of Steps S2 through S5 of FIGS. 1 and 2. In Step S26, the Web page service 13 requests a request URL from the document management service 14 for documents with a use of the document IDs included in the document ID list, the client identification information received in Step S21 and the session ID received in Step S23.

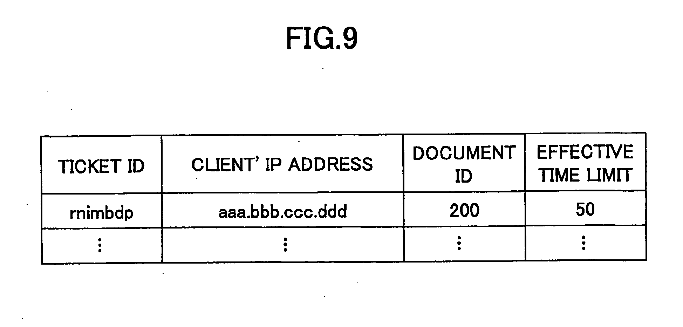

In response to the request for the request URL from the Web page service 13, the document management service 14 produces a ticket ID. The document management service 14 stores ticket management information providing a connection among the produced ticket ID, the client identification information of the client 1, the document IDs of the available documents, and the effective time limit of the ticket in the ticket management DB 16 as shown in FIG. 9. FIG. 9 shows a configuration of an example of the ticket management DB 16. The ticket management DB 16 has data items of ticket ID, client's IP address as an example of client identification information, document ID and effective time limit, as shown.

In response to the request for the request URL from the Web page service 13, the document management service 14 produces a request URL. Processing of Steps S27 through S28 is same as that of Step S7 and S8 of FIGS. 1 and 2.

In Step S29, the browser 11 requests a document', which the user requested as in Step S9 of FIG. 2, according to the incorporating request URL from the document management service 14. At this time, the browser 11 also transmits the client identification information to the document management service 14. The document management service 14 extracts the ticket ID 22 incorporated in the received incorporating request URL 21, and then, determines whether or not the ticket ID 22 and the client identification information received from the browser 11 are provided with a connection in the ticket management DB 16.

When it is determined that the ticket ID 22 incorporated in the received incorporating request URL 21 and the client identification information received from.the browser 11 are provided with a connection in the ticket management DB 16, the document management service 14 reads the document ID provided with the connection from the ticket ID, from the ticket management DB 16.

When it is determined that the ticket ID 22 incorporated in the received incorporating request URL 21 and the client identification information received from the browser 11 are not provided with a connection in the ticket management DB 16, the document management service 14 does not read the document ID provided with a connection from the ticket ID from the ticket management DB 16. At this time, the document management service 14 may issue an authentication error message to the browser 11 as a response.

After reading the document ID from the ticket management DB 16 as.mentioned above, the documents management service 14 obtains a document from a document storage location according to the thus-read document ID. In Step S30 following Step S29, the document management service 14 transmits the thus-obtained document to the browser 11. The browser 11 displays the thus-obtained document in the document display Web page on the screen of the client 1.

Thus, even when the ticket ID is furtively seen by a third person, and the third person requests the document from the fusion machine 2 with a use of the thus seen ticket ID, as no connection is provided between the ticket ID and client identification information of a client of the third person as ticket management information in the ticket management DB 16, the third person cannot obtain the document from the fusion machine 2.

Thus, according to the present invention, as the ticket ID and the client identification information are provided with a connection, it is possible to prevent an illegal client from performing, spoofing for the legitimate client. Thus, illegal acquisition of document can be effectively avoided.

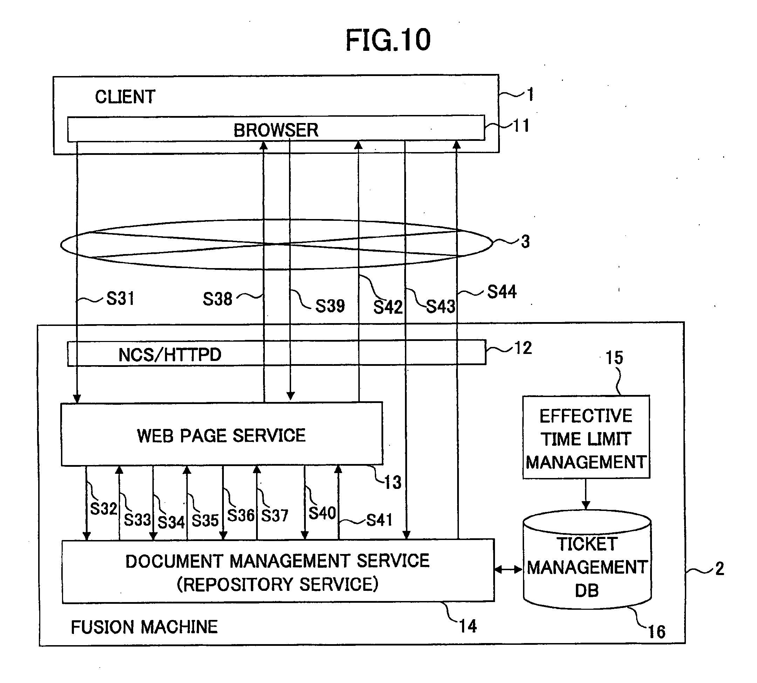

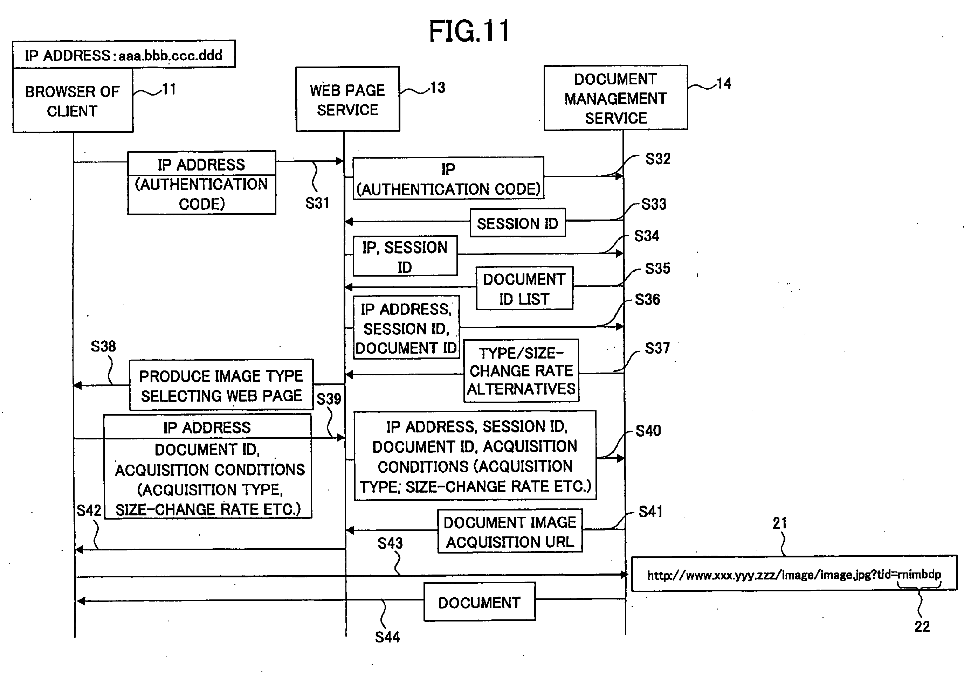

A third embodiment of'the present invention will now be described. FIG. 10 illustrates an information providing method in the third embodiment and FIG. 11 shows a sequence diagram of the information providing method in the third embodiment. As the information providing method of FIGS. 10 and 11 is same as that of FIGS. 7 and 8 except a part, duplicated description will be omitted.

In case of obtaining a document stored in the fusion machine 2, a user who operates the client 1 inputs an authentication code as one example of a password to the browser 11, and after that, inputs an instruction so as to cause the client 1 to start document acquisition processing.

Processing of Steps S31 through S35 is same as that of Steps S21 through S25 of FIGS. 7 and 8. In Step S36, the Web page service 13 requests alternatives of acquisition conditional information from the document management service 14 such as those for a type of document, a size change rate of displaying the document information, a range of page of the document information to be displayed, and so forth, with a use of the document ID included in the document ID list, the IP address of the client 1 obtained in Step S31, and the session ID obtained in Step S33.

In Step S37 following Step S36, the document management service 14 responds to the request for the acquisition conditional information alternatives from the Web page service 13, produces the acquisition conditional information alternatives, and transmits the same to the Web page service 14.

In Step S38 following Step S37, upon receiving the acquisition conditional information alternatives from the document management service 14, the Web page service 13 produces a Web page (referred to as acquisition condition selecting Web page, hereinafter) for the user to select acquisition conditional information. The Web page service 13 transmits the thus-produced acquisition condition selecting Web page to the browser 11 as an HTTP response.

When the user selects the acquisition conditional information on the acquisition condition selecting Web page, the browser 11 performs Step S39, produces an HTTP request including the IP address of the client 1, the document ID and the acquisition conditional information, and transmits the thus-produced HTTP request to the fusion machine 2 via the network 3. The HTTP request sent from the client 1 is provided to the Web page service 13 via the HTTPD of the NCS 12. Details of the HTTPD will be described later.

In Step S40 following Step S39, the Web page service 13 extracts the IP address, document ID and acquisition conditional information included in the HTTP request. The Web page service uses the thus-extracted IP address, document ID and acquisition conditional information, and the session ID received in Step S33, for requesting a request URL for the document from the document management service 14.

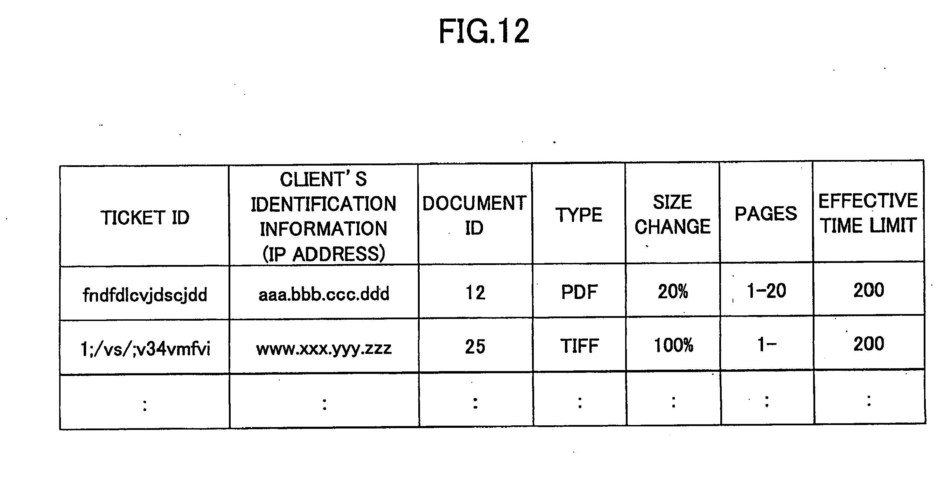

The document management service 14 responds to the request for the request URL from the Web page service 13, and produces a ticket ID. The document management service 14 stores in the ticket management DB 16 as shown in FIG. 12 ticket management information providing a connection among the produced ticket ID, the IP address of the client 1, the document ID of the available document, the acquisition conditional information and the effective time limit of the ticket ID.

FIG. 12 shows another example of the ticket management DB. The ticket management DB 16 shown in FIG. 12 has data items of ticket ID, client's IP address, document ID, document type, size-change rate, page range (to display) and effective time limit.

The document management service 14 responds to the request for the request URL form the Web page service 13,'and produces the request URL. Processing of Steps S41 through S43 is same as the processing of Steps S27 through S29 of FIGS. 7 and 8.

The documents management service 14 extracts the ticket ID 22 incorporated in the received incorporating request URL 21, and then, determines whether or not this ticket ID 22 and the IP address received from the browser 11 are provided with a connection in the ticket management DB 16.

When it is determined that the ticket ID 22 and the IP address received from the browser 11 are provided with a connection in the ticket management DB 16, the document management service 14 reads the document ID and the acquisition conditional information provided with the connection from the ticket ID 22, from the ticket management DB 16.

The document management service 14 obtains the document from a document storage location according to the read document ID, and converts the read document in the conditions indicated by the acquisition conditional information as is necessary. In Step S44 following Step S43, the document management service 14 transmits the thus-obtained document to the browser 11. The browser 11 displays the document display Web page including the thus-obtained document on the screen of the client 1.

In the third embodiment, the contents of the acquisition conditional information which the user specified via the browser 11 are not recorded as a log. Furthermore, even in a case where the data size of the specification for the acquisition conditional information is restricted in terms of a limitation of requesting process, the limitation to the data size of the specification for the acquisition conditional information can be overcome as a result of the acquisition conditional information being previously stored in the ticket management DB 16.

Thus, according to the present invention, as the ticket ID and the document acquisition conditional information are provided with a connection, it is possible to prevent the contents of the acquisition conditional information specified by the user from leaking to an illegal user.

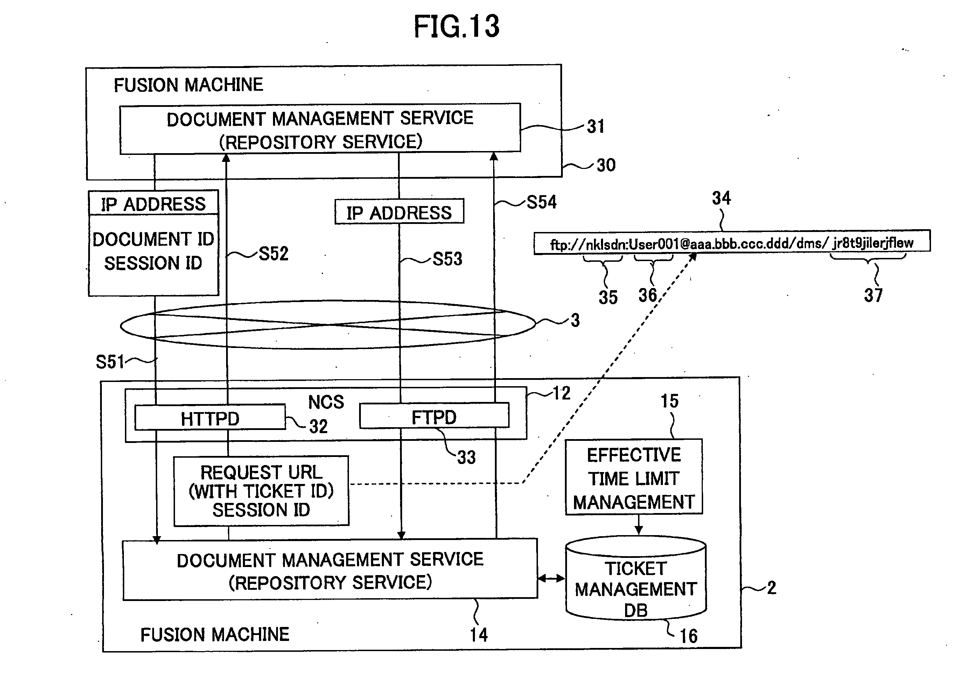

A fourth embodiment of the present invention will now be described. FIG. 13 illustrates an information providing method in the fourth embodiment. As the information providing method shown in FIG. 13 includes processing which is same as that in the above-described first through third embodiments, duplicated description will be omitted.

A document management service 31 in a fusion machine 30 uses a client function so as to establish a session with the document management server 14 of the fusion machine 2. In case of obtaining a document stored in the fusion machine 2, the document management service 31 of the fusion machine 30 produces an HTTP request including an IP address, a document ID and a session ID, transmits the thus-produced HTTP request to the fusion machine 2 via the network 3, and thus, requests a request URL, in Step S51.

The HTTP request thus transmitted from the document management service 31 of the fusion machine 30 is provided to the document management service 14 of the fusion machine 2 via the HTTPD 32 of the NCS 12. Details of the HTTPD will be described later.

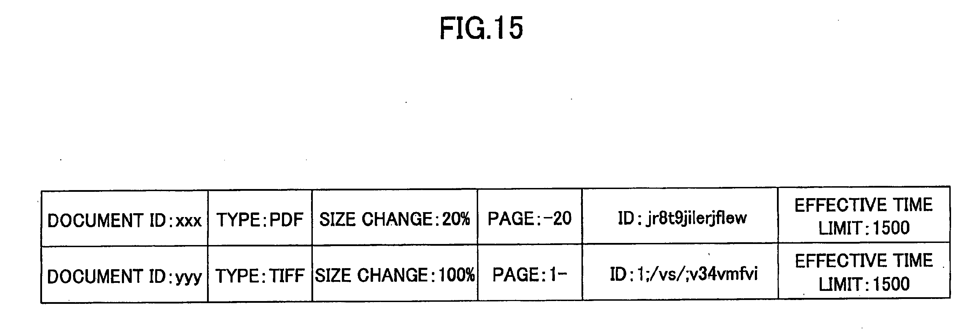

In Step S52 following Step S51, the document management service 14 extracts the IP address, document ID and session ID included in the HTTP request, and, as described above, produces a ticket ID. The document management service 14 stores ticket management information providing a connection among the thus-produced ticket ID, the document ID received in Step S51 and an effective time limit of the ticket ID in the ticket management DB 16 as shown in FIG. 15. The ticket management DB 16 shown in FIG. 15 also stores the above-mentioned acquisition conditional information also with a connection from the ticket ID.

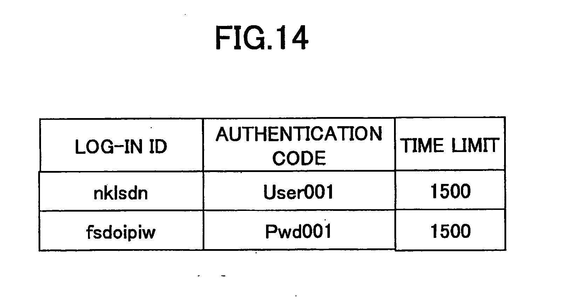

The fusion machine 2 has a log-in information DB providing a connection between an log-in ID and an authentication code as shown in FIG. 14. FIG. 14 shows an example of the log-in information DB. FIG. 15 shows another'example of the ticket management DB.

In response to the request for the request URL by the document management service 31, the document management service 14 produces an incorporating request URL 34. The incorporating request URL 34 has the log-in ID 35, authentication code 36 and ticket ID 37 incorporated therein.

The document management service 14 transmits the thus-produced request URL 34 and the session ID received in Step S51 to the document management service 31 of the fusion machine 30. In Step S53 following Step S52,the document management service 13 requests by FTP a document according to the incorporating request URL 34 from the fusion machine 2.

The incorporating URL 34 transmitted from the document management service 31 is provided to the document management service 14 via an FTPD 33 of an NCS 12. Details of the FTPD will be described later.

The document management service 14 extracts the log-in ID 35 and authentication code 36 incorporated in the received incorporating request URL, and performs authentication processing. When the authentication processing is completed normally, the document management service 14 extracts the ticket ID 37 incorporated in the incorporating request URL 34 and reads the document ID provided with the connection from this ticket ID 37 from the ticket management DB 16.

The document management service 14 obtains the document according to the document ID read. In Step S54 following Step S53, the document management service 14 transmits the thus-read document to the document management service 31 of the fusion machine 30.

Thus, according to the present invention, by utilizing the ticket management information for which the effective time limit is set appropriately for providing the document to the other fusion machine by FTP, it is possible to avoid illegal acquisition of the document effectively.

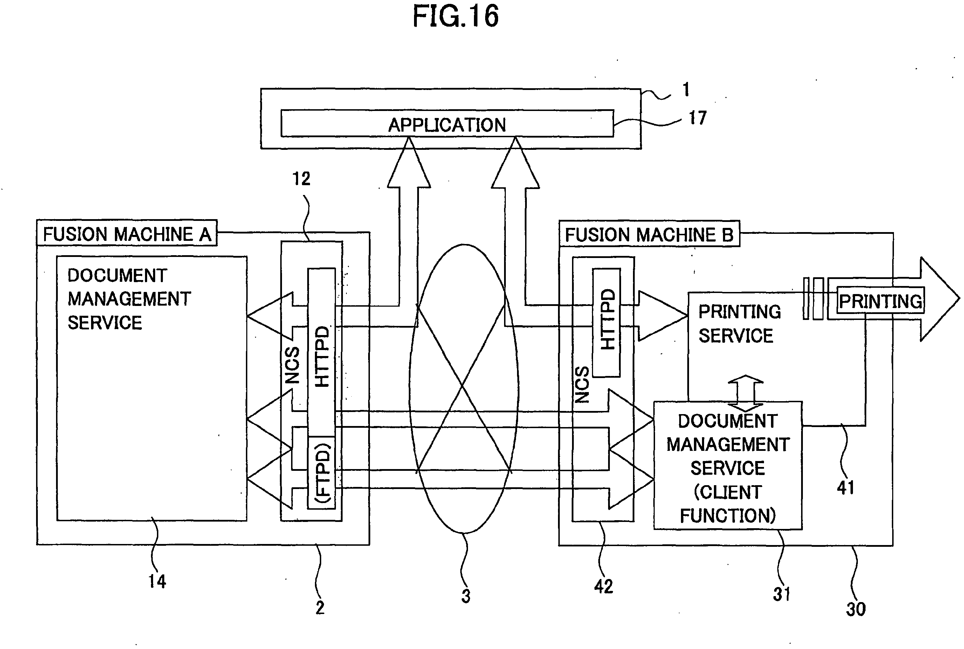

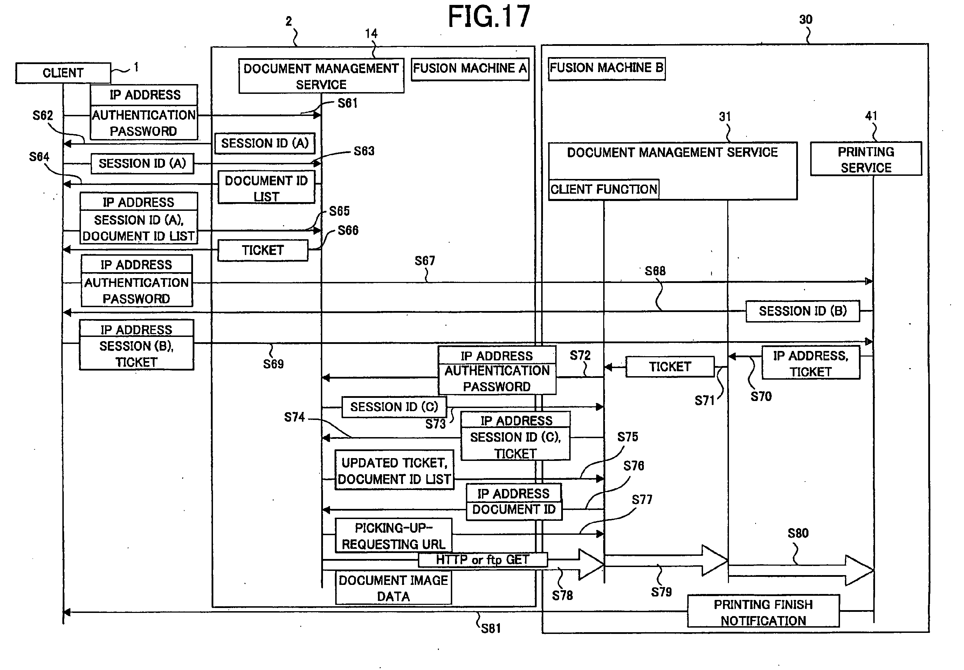

A fifth embodiment of the present invention will now be described. FIG. 16 illustrates an information providing method in the fifth embodiment. FIG. 17 shows a sequence diagram of the information providing method in the fifth embodiment. The information providing method in FIGS. 16 and 17 .includes the same processing as that in the above-described first through fourth embodiments, and thus, duplicated description will be omitted.

In Steps S61 through S66, a session (A) is established between an application 17 in a client 1 and the document management service 14 of the fusion machine 2. The application 17 obtains a document ID list from the document management service 14, and obtains a ticket from the document management service 14 for a document ID from among the document ID list to be printed out.

In Steps S67 through S69, a session (B) is established between the application 17 of the client 1 and a printing service 41 of a fusion machine 30. The application 17 requests the printing service 41 for printing out with a use of the ticket obtained.

In Steps S70 and S71, the printing service 41 transmits the ticket to the document management service 31 of the fusion machine 30, and requests the document therefrom. In Steps S72 and S77, a session (C) is established between the document management service 31 of the fusion machine 30 and the document management service 14 of the fusion machine 2.

The document management service 31 of the fusion machine 30 requests the document management service 14 for picking up of the document according to the ticket. The document management service 14 responds to the request from the document management service 31 for picking up the document, and transmits a picking-up-requesting URL to the document service 31. This picking-up-requesting URL has a ticket ID necessary for picking up the document, as in the above-described incorporating request URL.

In Steps S78 through S80, the document management service 31 uses the received picking-up-requesting URL so as to obtain the document from the URL, and transmits the thus-pick-up document to the printing service 41. The printing service 41 prints out the thus-received document. In Step S81, after the printing service 41 finishes printing out the document, the printing service 41 transmits a printing-finish notification to the application 17 of the client 1.

Thus, according to the present invention, by utilizing the ticket management information for which the effective time limit is appropriately set for providing of the document from the one fusion machine to the other fusion machine, it is possible to effectively avoid illegal acquisition of the document, and also, it is possible to achieve printing out of the document obtained from one fusion machine by another fusion machine.

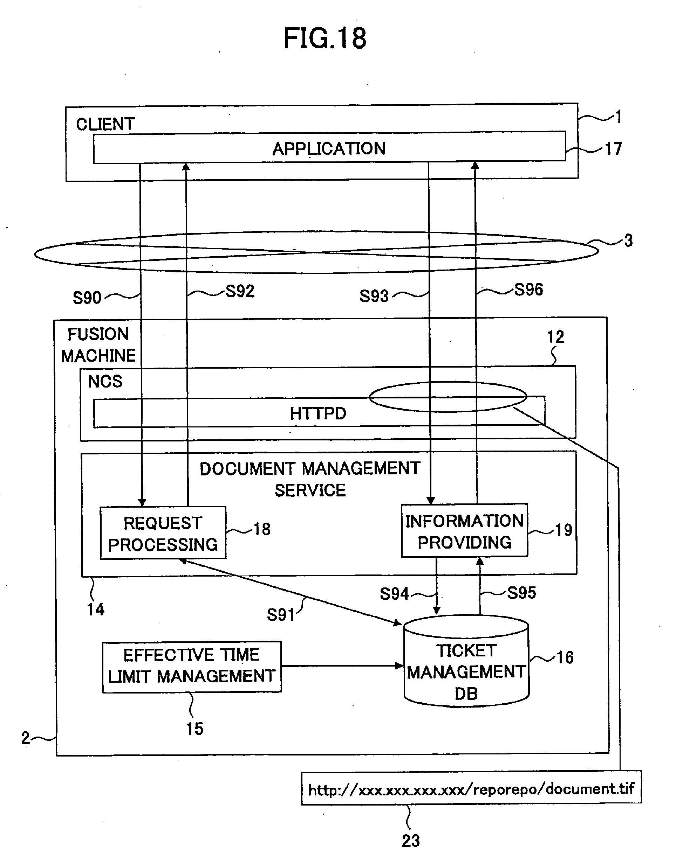

A sixth embodiment.of the present invention will now be described. FIG. 18 illustrates an information providing method in the sixth embodiment. In the information providing method shown in FIG. 18, a client 1 connected with a fusion machine 2 via a network 3 such as the Internet or a LAN obtains a document stored in the fusion machine 2. In order to obtain a document stored in the fusion machine 2, a user who operates the client 1 inputs an authentication code as an example of a password, and then, inputs an instruction to cause the client 1 to start a document acquisition processing.

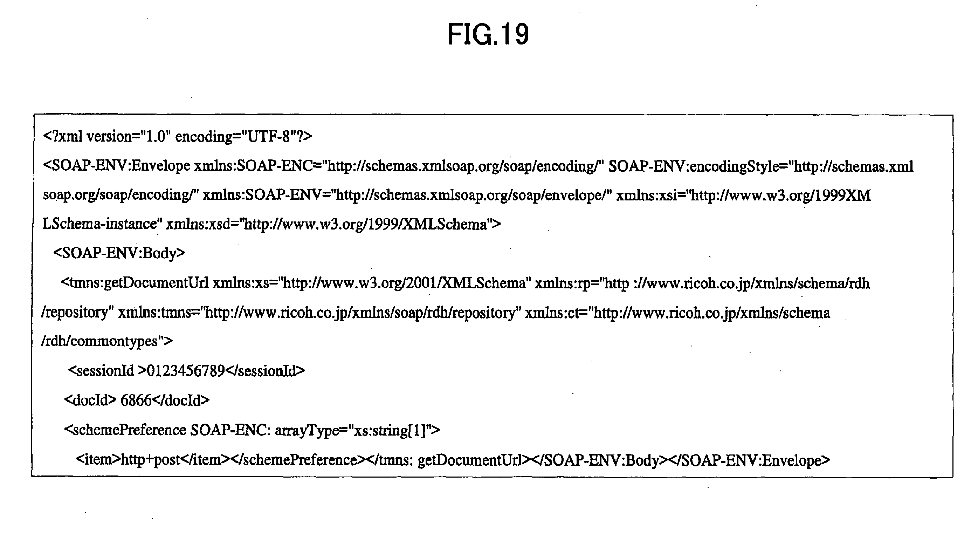

In Step S90, an application 17 of the client 1 produces an HTTP request including a document ID of a document specified by the user, as shown in FIG. 19, and transmits the HTTP request to the fusion machine 2 via the network 3. FIG. 19 shows a data structure of an example of the HTTP request. The application 17 transmits the HTTP request to the fusion machine 2 so as to request a request URL from a document management service 14 of the fusion machine 2.

The HTTP request transmitted from the client 1 is then provided to a request processing part 18 in the document management service 14 via an HTTPD of an NCS 12. Details of the HTTPD will be described later.

In Step S91 following Step S90, the request processing part 18 executes authentication as is necessary, and then, produces a ticket ID in response to the request for the request URL. The document management service 14 stores the thus-produced ticket ID, the document ID received in Step S90, and an effective time limit of the ticket, in a ticket management DB 16, as shown in FIG. 3, providing a connection thereamong.

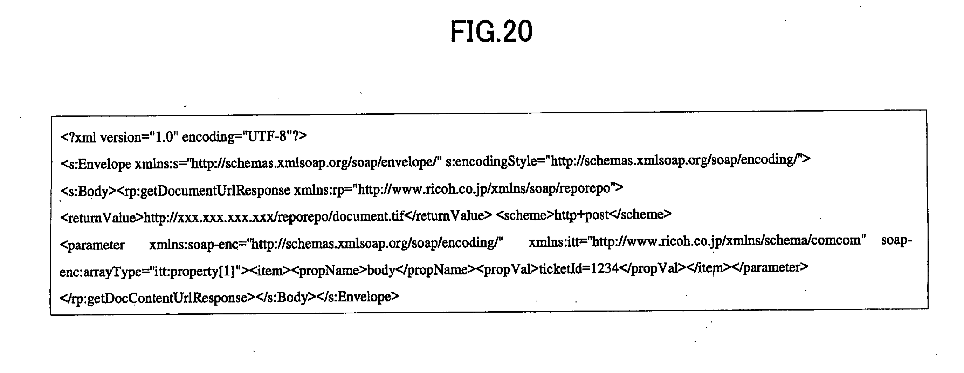

The request processing part 18 responds to the request for the request URL, and produces the request URL 23. In Step S92 following S91, the request processing part 18 produces an HTTP response as shown in FIG. 20 including the ticket ID and the request URL 23, and transmits the HTTP response to the application 17. FIG. 20 shows a data structure of an example of.the HTTP response transmitted in Step S92.

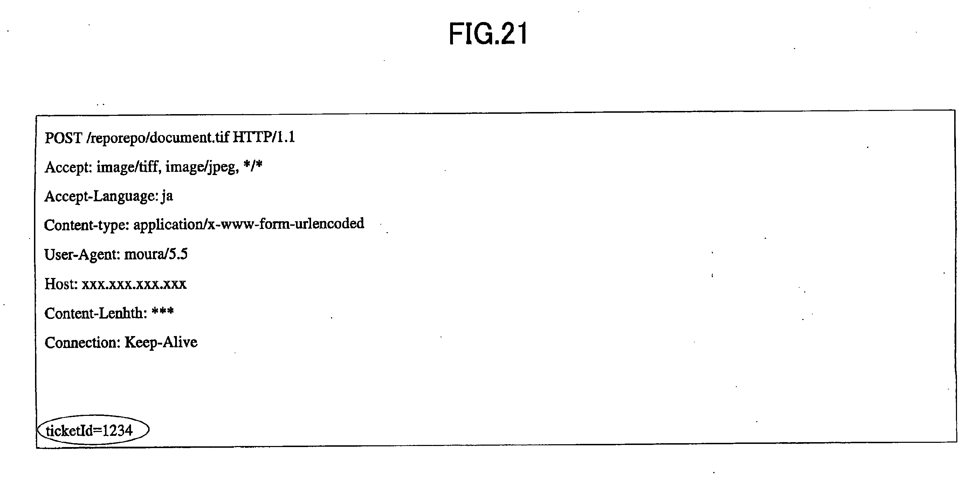

The application 17 produces an HTTP request including the ticket ID received in Step S92 as shown in FIG. 21, and transmits the HTTP request to the fusion machine 2 in Step S93. FIG. 21 shows a data structure of an example of the HTTP request thus transmitted in Step S93. In Step S93, without incorporation of the ticket ID in the request URL, but the ticket URL is included in the body part of the HTTP request as shown.

The HTTP request transmitted from the client 1 as mentioned above is provided to an information providing part 19 of the document management service 14 which is indicated by the request URL, via an HTTPD of the NIC 12. In Step S94 following Step S93, the information providing part 19 extracts the ticket ID from the received HTTP request, and reads the document ID provided with the connection from the ticket ID 22 from the ticket management DB 16.

The information providing part 19 obtains the document according to the thus-obtained document ID from a document storage location such as a hard disk device. In Step S96 following Step S95, the information providing part 19 transmits the thus-obtained document to the application 17. An effective time limit management part 15 shown in FIG. 18 monitors the effective time limits in the ticket management DB 16, and deletes the ticket management information for which the effective time limit has expired from the ticket management DB 16.

Accordingly, by setting a time interval such as that by which the processing in Steps S92 and S93 is positively executed as the effective time limit, it is possible to effectively reduce a possibility of achievement of illegal acquisition of the document even when the ticket is seen furtively by a third person. Furthermore, as a result of providing a configuration in which the information providing part 19 deletes the ticket management information already used, it is possible to effectively reduce a possibility of achievement of illegal acquisition of the document even when the ticket is seen furtively by a third person.

Thus, according to the present invention, by utilizing the ticket management information for which the effective time limit appropriately set for provision of the document to the client, it is possible to effectively avoid illegal acquisition of the document.

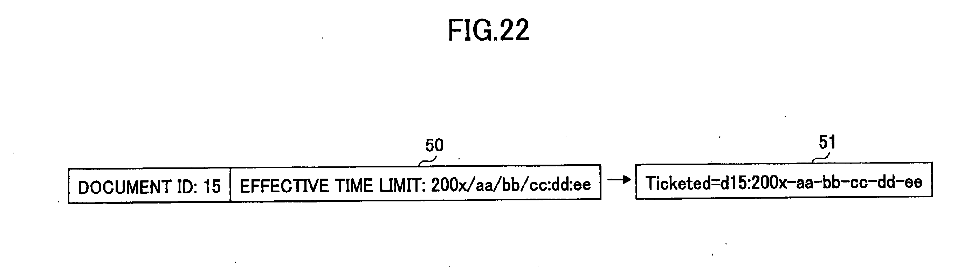

In each of the above-described first through sixth embodiments, the ticket management information providing a connection between the ticket ID and document ID is stored in the ticket management DB 16. However., it is not necessary needed to provide a connection between the ticket ID and document ID in the ticket management DB 16 when the ticket ID is made to have a meaning such as that by which the document ID can be determined from the ticket ID. FIG. 22 shows a data structure of an example of the ticket ID made to have a meaning such as that by which the document ID can be determined therefrom. In FIG. 22, the ticket ID 51 includes the effective time limit of the ticket. Also the ticket management information 50 is made up of the ticket ID and the effective time limit. Accordingly, in case of the ticket management information 50 and ticket ID 51 shown in FIG. 22, it is possible to determine the document ID from the ticket ID with a use of the effective time limit of the ticket. The ticket management information 50 shown in FIG. 22 may be encoded in terms of security.

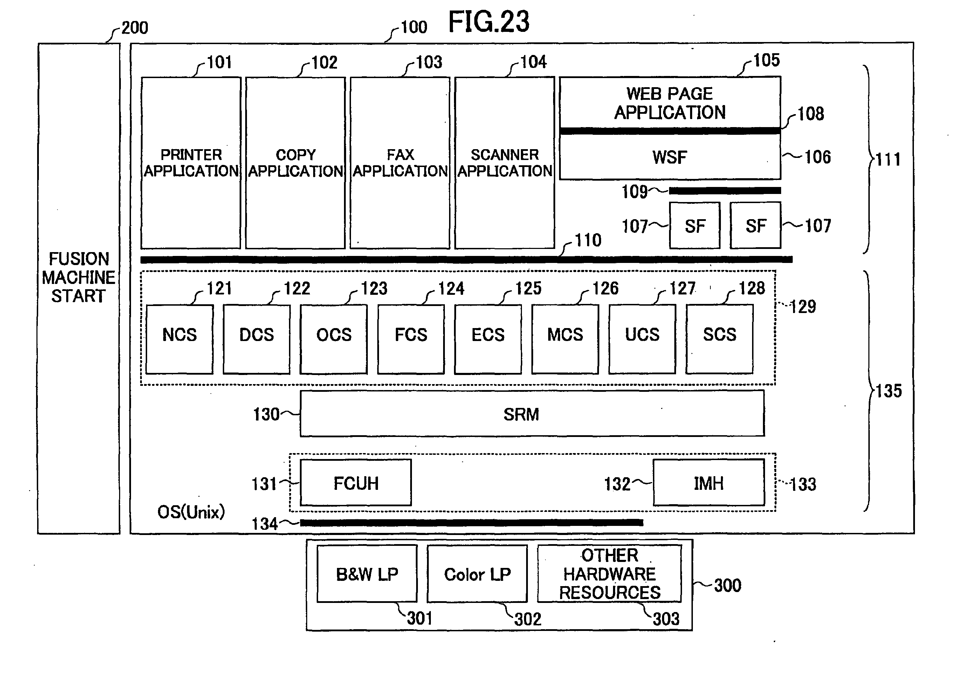

Details of the fusion machine 2 will now be described. FIG. 23 shows a configuration of an embodiment of a fusion machine according to the present invention. The fusion machine includes a software group 100, a fusion machine starting part 200, and hardware resources 300.

The fusion machine starting part 200 is a program first executed at a time of start of a power supply in the fusion machine 2, and starts an application layer 111 and a platform 135. For example, the fusion machine starting part 200 reads out programs of the application layer 111 and platform 135 from a hard disk drive (referred to as an HDD, hereinafter) etc., transmits each program which is thus read out to a memory area, and starts it.

The hardware resources 300 include a monochrome laser printer (B & W LP) 301, a color laser printer (Color LP) 302, and other hardware resources 303 such as a scanner and a facsimile device.

The software group 100 includes the application layer 111 and platform 135 which are started on an operating system (referred to as an OS, hereinafter), such as a UNIX (registered trademark). The application layer 111 includes programs for performing processing unique to a respective user service concerning image formation such as,those conventionally performed by a printer, a copier, facsimile machine, a scanner, etc.

The application layer 111 includes various software applications (programs) such as a printer application 101 for a printing function, a copy application 102 for a copying function, a facsimile application 103 for a facsimile function, a scanner application 104 for a scanning function, a WEB page application 105 for a WEB page function, a sharing function layer 107 including at least one shared function (referred as an SF, hereinafter), and a wrapping layer 106 having a WEB service function (referred to as a WSF, hereinafter) provided between the WEB page application 105 and the SFs 107.

The WSF 107 has a an application program interface 108 (refereed to as an API, hereinafter) by which, through a function previously defined, processing requests can be received from the WEB page application 105. Further, the SF 107 has an API 109 by which, through a function previously defined, processing requests can be received from the WSF 107.

When receiving processing requests through the API 108 from the WEB page application 105, the WSF 106 selects a respective one of the SFs 107 according to the processing requests. Then, the WSF 106 sends the processing requests thus received to the thus-selected SFs 107 via the API 108. When thus receiving the processing requests via the API 109, the SFs 107 execute processing in response to these requests.

For example, the fusion machine 2 shown in FIG. 23 includes the two SFs 107, and one thereof acts as the above-mentioned Web page service 13, and the other acts as the above-mentioned document management service 14.

The platform 135 includes, as software programs, a control service layer 129 which interprets processing requests sent from the application layer 111, and creates requests for acquiring necessary hardware resources 300; a system resource manager (referred to as an SRM, hereinafter) 130 which performs management on at least one hardware resource 300, and performs arbitration on the acquiring requests sent from the control service layer 129, and a handler layer 133 performing management of the hardware resources 300 in response to the acquisition requests coming from the SRM 130.

The above-mentioned control service layer 129 includes at least one service module (software program or so) such as a network control service (referred to as an NCS) 121, a delivery control service (referred to as a DCS) 122, an operation panel control service (referred to as an OCS) 123, a facsimile control service (referred to as an FCS) 124; an engine control service (referred to as an ECS) 125; a memory control service (referred to as an MCS) 126; a user information control service (referred to as a UCS) 127; a system control service (referred to as an SCS) 128, and so forth.

The platform 135 has an application program interface (referred to as an API) through which a processing request coming from the application layer 111 can be properly received through a previously defined function. The OS carries out parallel execution of respective ones of the software programs included in the application layer 111 and the platform 135 regarding them as respective processes.

A process of the NCS 121 provides a service utilizable in common for applications which need network I/O, and acts as an agency for performing distribution/delivery of data received from the network in each type of protocol to a respective application, while performing transmission of data coming from each application to the network.

For example, the NCS 121 controls data communications with the client connected through the network according to the HTTP (HyperText Transfer Protocol) with the HTTPD (HyperText Transfer Protocol Daemon). Further, the NCS 121 controls data communications with the client connected through the network according to FTP (File Transfer Protocol) with the FTPD (File Transfer Protocol Daemon).

A process of DCS 122 controls delivery of stored documents etc. A process of OCS 123 controls an operation panel which is used as an information transfer device between an operator or user and the control system in the fusion machine 2. A process of the FCS 124 provides an API for performing a facsimile transmission/reception utilizing PSTN or ISDN to/from the application layer 111, registration/reference of various types of facsimile data managed in a memory provided for a backup purpose, a facsimile reading-in operation, facsimile reception and printing-out operation, and so forth.

A process of the ECS 125 is of controlling an engine part, such as the monochrome laser printer 301, color laser printer 302 and hardware resources 303. A process of the MCS 126 is of a memory control such as acquisition/release of an image memory area, a use of an HDD area, compression/decompression of image data, etc. A process of the UCS 127 performs management of user's personal information.

A process of the SCS 128 is of an application management, an operation unit control, a system screen display, an LED display, a hardware resource management, an interruption application control, etc.

A process of the SRM 129 is of performing a control of the system and a management of the hardware resources 135 together with the SCS 128. For example, the SRM 129 performs arbitration and execution control according to acquisition requests coming from higher layers utilizing the hardware resources 300 such as the monochrome laser printer 301, color laser printer 302 and so forth.

Specifically, the SRM 129 determines whether or not the requested hardware resources 300 are available or whether or not these hardware resources 300 are already used by other requests, and, when they are available, it notifies that the requested hardware resources are available to the upper layers. Furthermore, the SRM 129 receives acquisition requests from the upper layers, performs scheduling thereon for efficiently utilizing the hardware resources 300, and also directly performs requested tasks (for example, paper feeding and image formation with the printer engine, memory acquisition, file creation, and so forth).

The handler layer 133 includes a facsimile control unit handler (referred to as a FCUH) 131 performing management of a facsimile control unit (referred to as an FCU, which will be described later), and an image memory handler (referred to as an IMH) 132 which performs allocation of memory areas for respective processes, and a management of the thus-allocated memory areas.

The SRM 130 and FCUH 131 utilize an engine I/F 134 which enables transmission of processing requests toward the hardware resources 300 through a previously defined function, and, thus, actually makes processing requests to the hardware resources 300.

By this configuration shown in FIG. 23, the fusion machine 2 can manage, in centralization manner, operations required in common by respective applications in the platform 135.

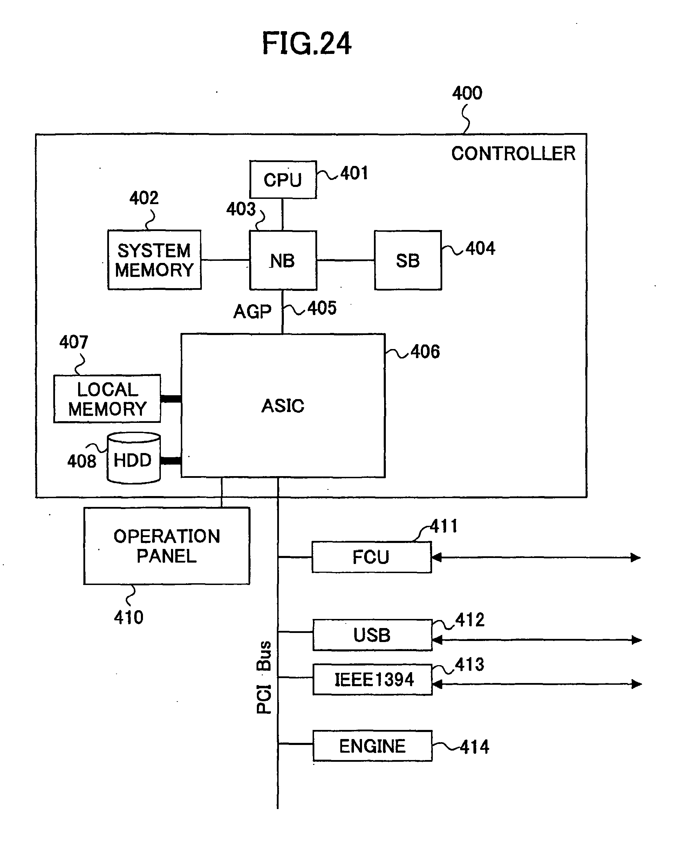

A hardware configuration of the fusion machine 2 will now be described. FIG. 24 shows the hardware configuration of the above-described fusion machine 2 in one embodiment of the present invention. The fusion machine 2 includes a controller.400, which actually performs various control operations in the fusion machine 2 described above, the operation panel 410, the FCU 411, a USB device 412, an IEEE 1394 device 413 and the engine part 414.

The controller 400 includes a CPU 401, a system memory 402, a north bridge (NB) 403, a south bridge (SB) 404, an ASIC 406, a local memory 407 and a HDD 408.

The operation panel 410 is connected to the ASIC 406 of the controller 400. The FCU 411, USB device 412, IEEE 1394 device 413 and engine part 412 are connected to the ASIC 406 of the controller 400 via a PCI bus.

In the controller 400, the local memory 407, HDD 408, etc. are connected to the ASIC 406, and the CPU 401 and the ASIC 406 are connected together via the NB 403 of the CPU chip set. In the controller 400, by connecting the CPU 401 and the ASIC 406 via the NB 403, the controller 400 is applicable to a case when the interface of the CPU 401 is not opened to the public.

The ASIC 406 and NB 403 are connected not via a PCI bus but via an AGP (Accelerated Graphic Port) 405. Thus, in order to perform an execution control on one or a plurality of processes provided by the applications 111 and the platform 135 of FIG. 23, a degradation in performance can be avoided by connecting the ASIC 406 and the NB 403 together not via a low-rate PCI bus but via the AGP 405.

The CPU 401 performs a control of the entire fusion machine 2. The CPU 401 starts and executes the NCS 121, DCS 122, OCS 123, FCS 124, ECS 125, MCS 126, UCS 127, SCS 128, SRM 129, FCUH 131 and IMH 132 as processes, respectively, on the OS, and, also, starts and executes the printer application 101, copy application 102, facsimile application 103, scanner application 104, Web page application 105, WSF 106 and SFs 107 included in the application layer 111.

The NB 403 is a bridge connecting the CPU 401, system memory 402, SB 404, and ASIC 406. The system memory 402 is a memory used as a drawing memory in the fusion machine 2. The SB 404 is a bridge connecting the NB 403 with a ROM, the PCI bus and peripheral devices. The local memory 407 is a memory used as a buffer for image copying, a code buffer, or so.

The ASIC 406 is an IC including a hardware device for image processing, and used for an image processing purpose. The HDD 408 is one example of a storage (secondary storage) used for storing image data, storing document data, storing various sorts of programs, storing font data, storing various data concerning forms, or so. The operation panel 410 is an operation part accepting an input operation from a user, and also, performing a display to the user.

Seventh through ninth embodiments of the present invention will now be described. Also in these embodiments, as a fusion machine is assumed as one example of a service providing apparatus, any other apparatus can also be applied thereto as long as it provides a predetermined service in response to a client's request.

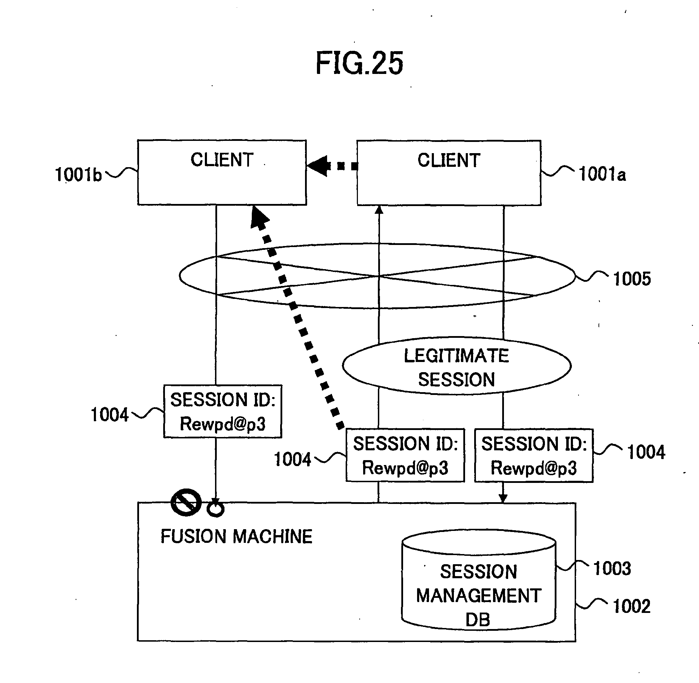

FIG. 25 illustrates a principle of an aspect of the present invention concerning the seventh through ninth embodiments. A fusion machine 1002 is connected with clients 1001a and 1001b via a network 1005 such as the Internet, a LAN or so. The fusion machine 1002 provides a predetermined service to the clients 1001a or 1001b in response to a request therefrom.

In case where the client 1001a wishes to use a service provided by the fusion machine 1002, the client 1001a transmits a session start request to the fusion machine 1002. Upon receiving the session start request from the client 1001a, the fusion machine 1002 establishes a session with the client 1001a, and stores session management information to a session management DB 1003, the session management information providing a connection between a session ID for identifying the session and client identification information (such as an IP address, a MAC address or so) for identifying the client 1001a. The client identification information is not limited to the IP address or MAC address, but may be other information as long as it is unique for each client.

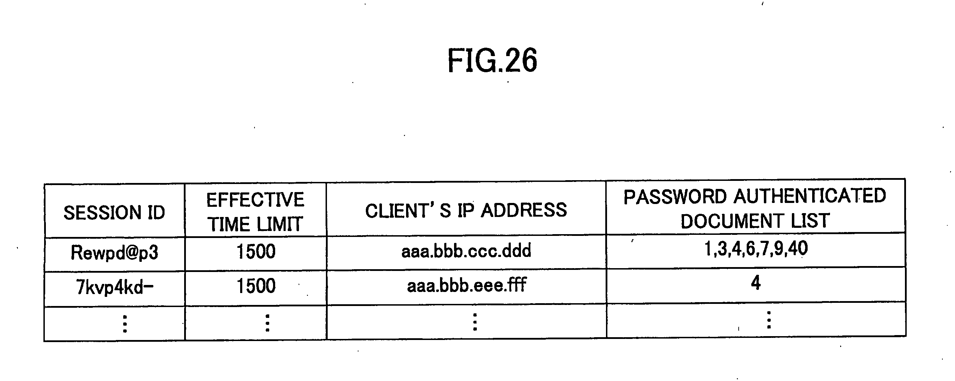

In case of an IP address is applied as the client identification information, the session management DB 1003 is configured as shown in FIG. 26. FIG. 26 shows a data structure of an example of the session management DB 1003.

The session management DB 1003 shown in FIG. 26 has data items of session ID, effective time limit, client's IP address, and password authenticated document list. The effective time limit indicates an effective time limit for the session. The session management information for which the effective time limit has expired is deleted from the session management DB 1003. The password authenticated document list is a data item which is provided in a case where a service provided by the fusion machine 1002 is a provision of a document.

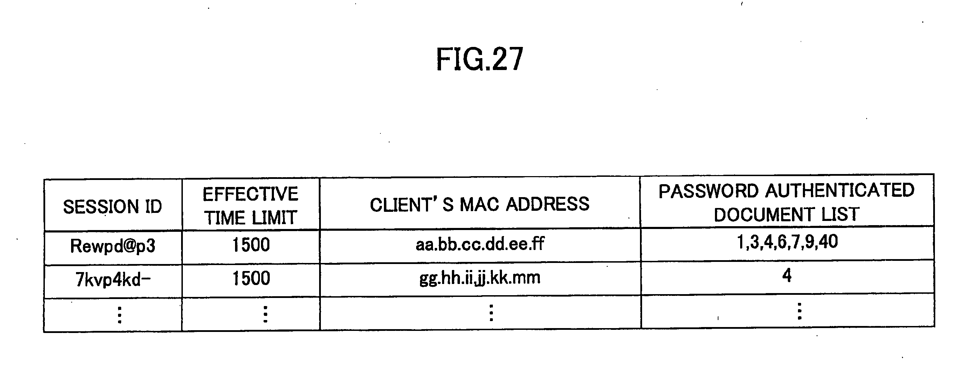

In case where a MAC address is used as the client identification information, the session management DB 1003 is configured as shown in FIG. 27. FIG. 27 shows a data structure of another example of the session management DB 1003.

The session management DB 1003 shown in FIG. 27 has data items of session ID, effective time limit, client's MAC address, and password authenticated document list. The data items of the effective time limit and password authenticated document list are same as those in the case of FIG. 26 described above.

The fusion machine 1002 transmits to the client 1001a which transmitted the session start request a session ID 1004 of the session established with the client 1001a. The client 1001a includes the session ID 1004 in a request in case of requesting the fusion machine 1002 for a service.

Upon receiving the request including the session ID 1004, the fusion machine 1002 refers to the session management information in the session management DB 1003, and determines whether or not the session ID 1004 included in the received request and the client identification information of the client 1001a which transmitted the request are provided with a connection in the session management information.

When it is determined that the session ID 1004 included in the received request and the client identification information of the client 1001a which transmitted the request are'provided with a connection in the session management information in the session management DB 1003, the fusion machine 1002 provides the service to the client 1001a according to the request.

In case of applying the session management DB 1003 shown in FIG. 26 for example, upon receiving a request including a session ID 'Rewpd@p3' from the client 1001a having the IP address of 'aaa.bbb.ccc.ddd', the fusion machine 1002 determines that the session ID included in the request received and the IP address of the client 1001a which transmitted the request are provided with a connection in the session management information as they coincide with the information recorded in the session management DB 1003 shown in FIG. 26.

On the other hand, when it is determined that the session ID 1004 included in the received request and the client identification information of the client 1001a which transmitted the request are not provided with a connection in the session management information in the session management DB 1003, the fusion machine 1002 does not provide the service to the client 1001a according to the request.

In case of applying the session management DB 1003 shown in FIG. 26 for example, upon receiving a request including a session ID 'Rewpd@p3' from the client 1001b having the IP.address of 'aaa.bbb.yyy.zzz', the fusion machine 1002 determines that the session ID included in the request received and the IP address of the client 1001b which transmitted the request are not provided with a connection in the session management information as they do not coincide with the information in the session management DB 1003 shown in FIG. 26.

Therefore, even a user of the client 1001b furtively sees the session ID 1004 and requests a service from the fusion machine 1002 with a use of this session ID 1004, as the session ID 1004 and the client identification information of the client 1001b are not provided with a connection as session management information in the session management DB 1003, the user of the client 1001b cannot receive the service from the fusion machine 1002.

Thus. According to the present invention, it is possible to avoid spoofing by the illegal client 1001b for the legitimate client 1001a, and thus, to effectively prevent illegal usage of service.

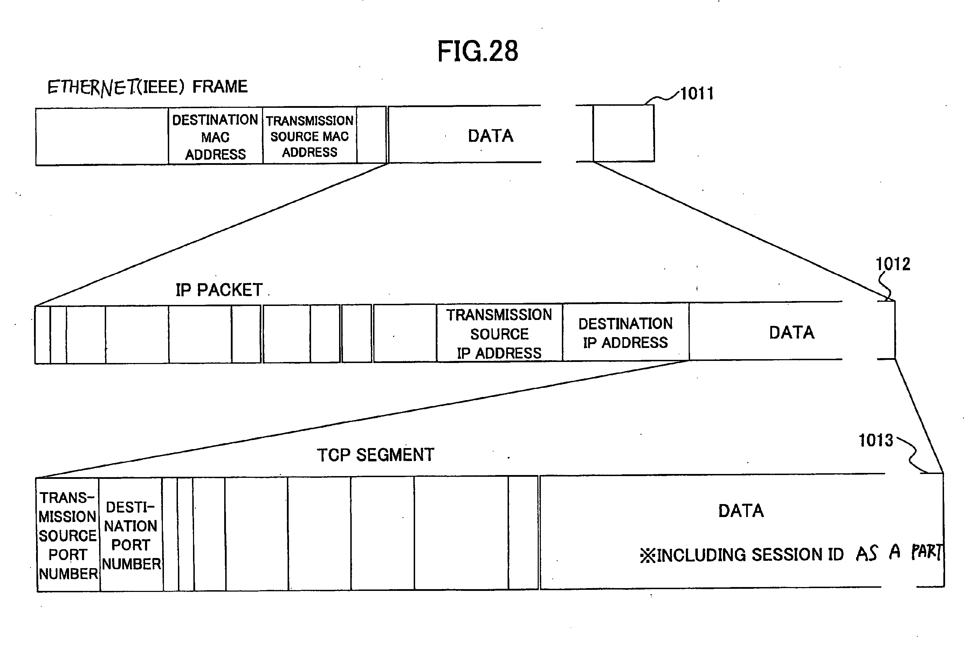

An effective range according to the present invention in case where the IP address or MAC address is selected as the client identification information will now be described. FIG. 28 shows data structures of general examples of an Ethernet (registered trademark) frame 1011, an IP packet 112 and a TPC segment 1013.

In case where the MAC address is selected as the client identification information, a MAC address in the Ethernet frame (simply referred to as 'frame' hereinafter) 1011 is used as the data item of 'client's MAC address' shown in FIG. 3. By utilizing the MAC address prescribed for the OSI reference model's data link layer as the client identification information, it is possible to avoid spoofing in the layers higher than or equal to the third layer of the OSI reference model.

In case where the IP address is selected as the client identification information, an IP address in the IP packet 1012 is utilized as the data item of 'client's IP address' in FIG. 26. By utilizing the IP address prescribed for the OSI reference model's network layer as the client identification information, it is possible to avoid spoofing in the layers higher than or equal to the fourth layer of the OSI reference model.

Other than them, it is also possible to utilize an address (for example, a port number or so) prescribed for the application layer in the OSI reference model as the client identification information. By utilizing an address prescribed for the application layer as the client identification information, it is possible to avoid spoofing by a user who merely sees the session ID furtively.

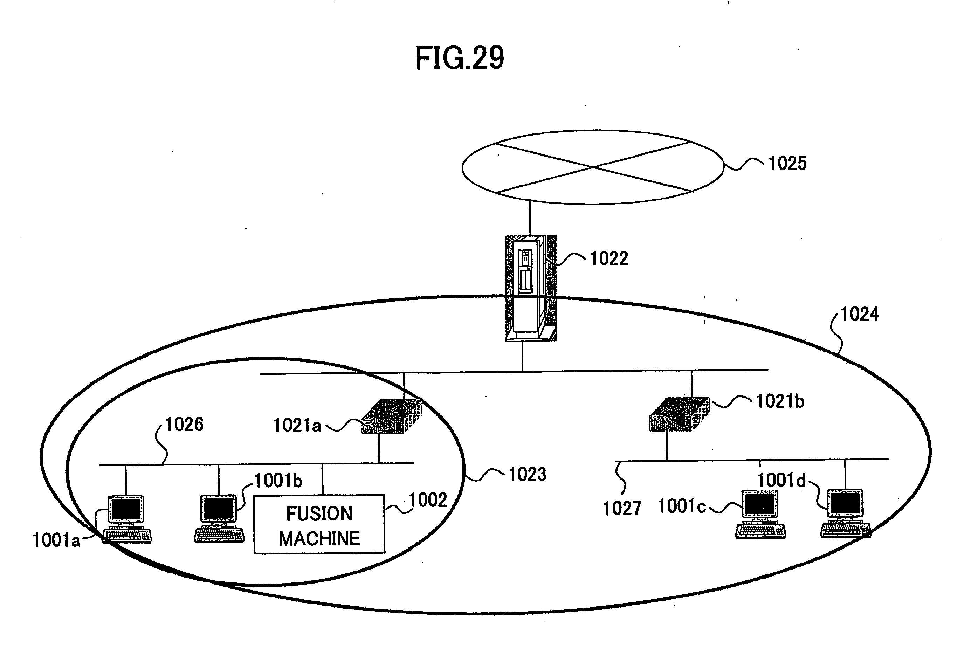

FIG. 29 illustrates the effective range in case the IP address or MAC address is selected as the client identification information according to the present invention. The fusion machine 1002 is connected with the clients 1001a and 1001b via a network 1026. Furthermore, the fusion machine 1002 is connected with the clients 1001c and 1001d via routers 1021a and 1021b, and a network 1027. A proxy server 1022 performs repeating on a level of the application layer.

In the example of FIG. 29, the MAC addresses of the clients 1001a and 100b are transmitted through the fusion machine 1002 since they are connected to the common network 26. On the other hand, the MAC addresses of the clients 1001c and 1001d are not transmitted through the fusion machine 1002 since they are connected to the other network 1027. However, the IP addresses of the clients 1001a and 1001b connected to the common network 1026 and the IP addresses of the clients 1001c and 1001d connected to the other network 1026 are both transmitted through the fusion machine 1002. Neither the MAC address nor the IP address of a client, not shown, connected to the network 1025 is transmitted to the fusion machine 1002.

This is because the routers 1021a and 1021b do not transmit the MAC address included in the received frame, while the proxy server 1022 does not transmit the IP address included in the received packet, in general.

As a result, in case where the MAC address is selected as the client identification information, the effective range according to the present invention where the MAC address can be used as information to directly identify the client by the fusion machine 1002 or the MAC address is transmitted through the fusion machine 1002 from the client is a range 1023 shown in FIG. 29. Similarly, in case where the IP address is selected as the client identification information, the effective range according to the present invention where the IP address can be used as information to directly identify the client by the fusion machine 1002 or the IP address is transmitted through the fusion machine 1002 from the client is a range 1024 shown in FIG. 29.

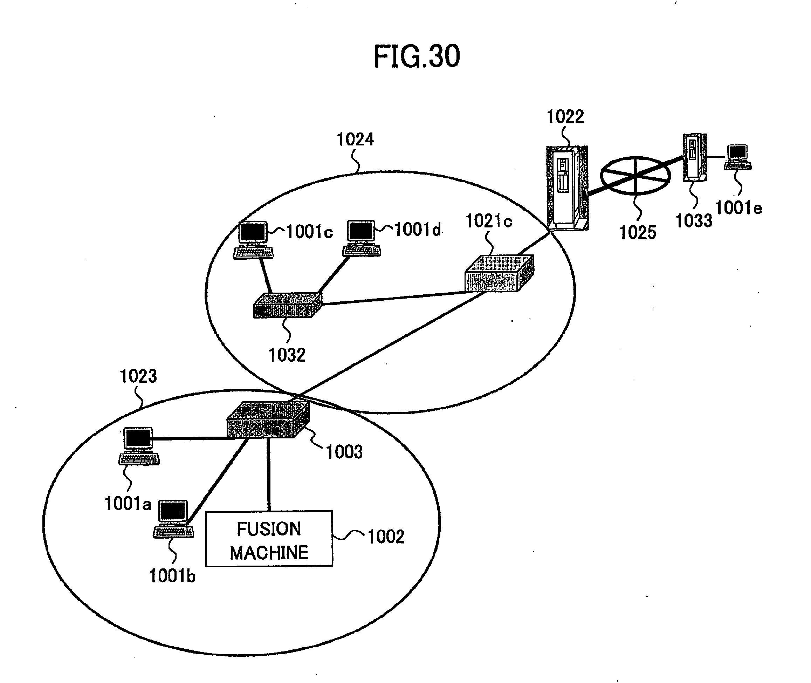

By utilizing of the effective range shown in FIG. 29 according to the present invention, it is possible to provide a limitation in a service provided by the fusion machine 1002. FIG. 30 illustrates an information providing method in which a limitation is provided in a service with a use of the effective range described above according to the present invention.

In FIG. 30, a range 1023 shows the effective range defined in case where the MAC address is selected as the client identification information according to the present invention. A range 1024 shows the effective range defined in case where the IP address is selected as the client identification information according to the present invention.

In the system shown in FIG. 30, a fusion machine 1002 is connected with clients 1001a and 1001b via a hub 1031. The fusion machine 1002 is connected with clients 1001c and 1001d via the hub 1031, a router 1021c and a hub 1032. The fusion machine 1002 is connected with a client 1001e with the hub 1031, router 1021c, a proxy server 1022, a network 1025 and a proxy server 1033.

The fusion machine 1002 utilizes the MAC address as the client identification information for the clients 1001a and 1001b within the range 1023 through which the MAC address is transmitted or is usable to identify the client with a use of the MAC address of the client. By using the MAC address prescribed for the second layer as mentioned above for identifying the client, spoofing becomes very difficult. Accordingly, all the services (for example, document deletion, rewriting, setting of the fusion machine 1002, or so) will be provided to the clients 1001a and 1001b within the range 1023.

The fusion machine 1002 utilizes the IP address as the client identification information for the clients 1001c and 1001d within the range 1024 through which the IP address is-transmitted or is usable to identify the client with a use of the IP address of the client. By using the IP address prescribed for the third layer as mentioned above for identifying the client, spoofing becomes difficult even through the security level is lower than that in the case of applying the MAC address. Accordingly, all the services but a part thereof (for example, reference to a document and so forth) will be provided to the clients 1001c and 1001d within the range 1024.

The fusion machine 1002 utilizes a client ID as the client identification information for the client 1001e out of the ranges 1023 and 1024 through which neither the MAC address nor the IP address is transmitted or is usable to identify the client with a use thereof of the client. By using the client ID prescribed for the application layer as mentioned above for identifying the client, spoofing is relatively easy in comparison to the case where the MAC adders or IP address is applied. Accordingly, a limited service (confirmation as to whether or not the fusion machine 1002 operates properly, or so) will be provided to the clients 1001e.

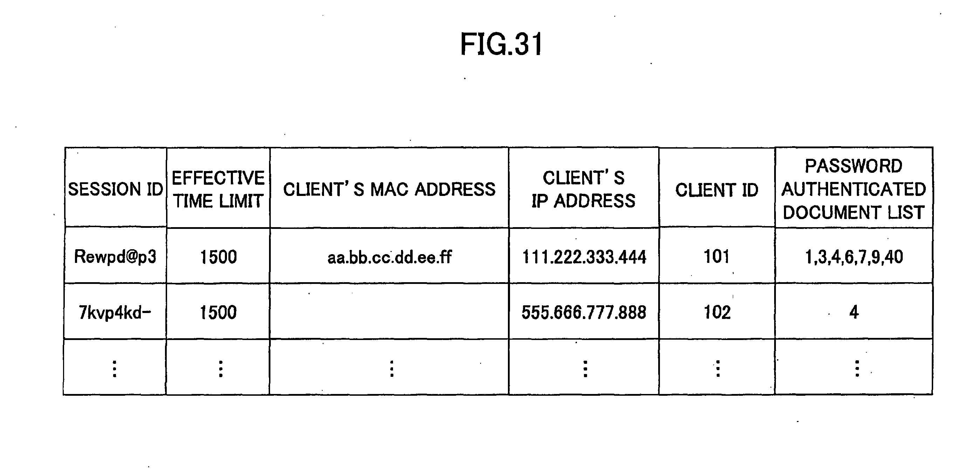

When utilizing any one of the MAC address, IP address or client ID as the client identification information, the fusion machine 1002 has the session management DB 1003 shown in FIG. 31.

FIG. 31 shows a data structure of the session management DB 1003 in case where any one of the MAC address, IP address or client ID is utilized as the client identification information. The session management DB 1003 shown in FIG. 31 has data items of session ID, effective time limit, client's MAC address, client's IP address, client ID, and password authenticated document list.

In case of receiving a session start request from the client 1001a or 1001b within the range through which the MAC address is transmitted, the fusion machine 1002 utilizes the MAC address as the client identification information.

Further, in order to utilize a fact that a MAC address of the router 1021c and an IP address of the proxy server 1022 is transmitted through the fusion machine 1002, the fusion machine 1002 previously registers the MAC address of the router 1021c and the IP address of the proxy server 1022.

Upon receiving a session start request via the router 1021c (this can be determined from the registered MAC address thereof), the fusion machine 1002 determines that the session start request is received from the client 1001c or 1001d. The fusion machine 1002 utilizes the IP address of the client as the client identification information also in this case as mentioned above. Furthermore, upon receiving a session start request via the proxy server 1022 (this can be determined from the registered IP address thereof), the fusion machine 1002 determines that the session start request is received from the client 1001e. The fusion machine 1002 utilizes the client ID of the client as the client identification information also in this case as mentioned above.

Thus, the fusion machine 1002 can utilize any one of the MAC address, IP address and client ID as the client identification information according to a state of connection with the client which transmitted the session start request. The determination as to which of the MAC address, IP address and client ID is utilized as the client identification information may be automatically performed by the fusion machine 1002, or may be performed based on a table which is previously set manually.

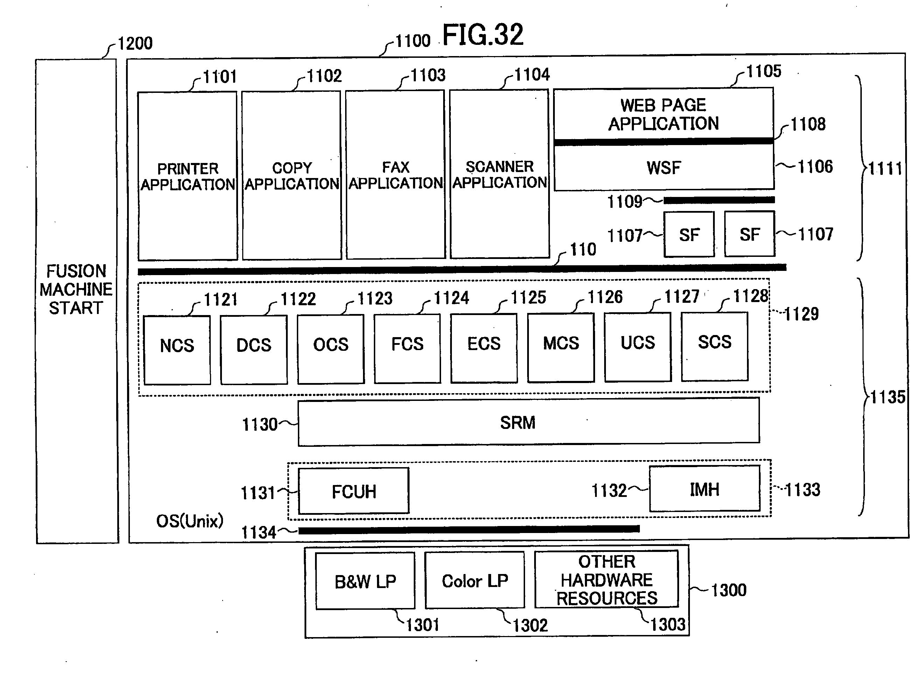

Details of the fusion machine 1002 will now be described.' FIG. 32 shows a configuration of an embodiment of a fusion machine according to the present invention applicable to the service providing methods in the seventh through ninth embodiments of the present invention. The fusion machine includes a software group 1100, a fusion machine starting part 1200, and hardware resources 1300.

The fusion machine starting part 1200 is a program first executed at a time of start of a power supply in the fusion machine 1002, and starts an application layer 1111 and a platform 1135. For example, the fusion machine starting part 1200 reads out programs of the application layer 1111 and platform 1135 from a hard disk drive (referred to as an HDD, hereinafter) etc., transmits each program which is thus read out to a memory area, and starts it.

The hardware resources 1300 include a monochrome laser printer (B & W LP) 1301, a color laser printer (Color LP) 1302, and other hardware resources 303 such as a scanner and a facsimile device.

The software group 1100 includes the application layer 1111 and platform 1135 which are started on an operating system (referred to as an OS, hereinafter), such as a UNIX (registered trademark). The application layer 1111 includes programs for performing processing unique to a respective user service concerning image formation such as those conventionally performed by a printer, a copier, facsimile machine, a scanner, etc.

The application layer 1111 includes various software applications (programs) such as a printer application 1101 for a printing function, a copy application 1102 for a copying function, a facsimile application 1103 for a facsimile function, a scanner application 1104 for a scanning function, a WEB page application 1105 for a WEB page function, a sharing function layer 1107 including at least one shared function (referred as an SF, hereinafter), and a wrapping layer 1106 having a WEB service function (referred to as a WSF, hereinafter) provided between the WEB page application 1105 and the SFs 1107.

The WSF 1107 has a an application program interface 1108 (refereed to as an API, hereinafter) by which, through a function previously defined, processing requests can be received from the WEB page application 1105. Further, the SF 1107 has an API 1109 by which, through a function previously defined, processing requests can be received from the WSF 1107.

When receiving processing requests through the API 1108 from the WEB page application 1105, the WSF 1106 selects a respective one of the SFs 1107 according to the processing requests. Then, the WSF 106 sends the processing requests thus received to the thus-selected SFs 1107 via the API 1108. When thus receiving the processing requests via the API 109, the SFs 1107 execute processing in response to these requests.

For example, the fusion machine 1002 shown in FIG. 32 includes the two SFs 1107, and one thereof acts as a network service described later, and the other acts as a document management service also described later.

The platform 1135 includes, as software programs, a control service layer 1129 which interprets processing requests sent from the application layer 1111, and creates requests for acquiring necessary hardware resources 1300; a system resource manager (referred to as an SRM, hereinafter) 1130 which performs management on at least one hardware resource 1300, and performs arbitration on the acquiring requests sent from the control service layer 1129, and a handler layer 1133 performing management of the hardware resources 1300 in response to the acquisition requests coming from the SRM 1130.

The above-mentioned control service layer 1129 includes at least one service module (software program or so) such as a network control service (referred to as an NCS) 1121, a delivery control service (referred to as a DCS) 1122, an operation panel control service (referred to as an OCS) 1123, a facsimile control service (referred to as an FCS) 1124; an engine control service (referred to as an ECS) 1125; a memory control service (referred to as an MCS) 126; a user information control service (referred to as a UCS) 1127; a system control service (referred to as an SCS) 1128, and so forth.

The platform 1135 has an application program interface (referred to as an API) through which a processing request coming from the application layer 1111 can be properly received through a previously defined function. The OS carries out parallel execution of respective ones of the software programs included in the application layer 1111 and the platform 1135 regarding them as respective processes.

A process of the NCS 1121 provides a service utilizable in common for applications which need network I/O, and acts as an agency for performing distribution/delivery of data received from the network in each type of protocol to a respective application, while performing transmission of data coming from each application to the network.

For example, the NCS 1121 controls data communications with the client connected through the network according to the HTTP (HyperText Transfer Protocol) with the HTTPD (HyperText Transfer Protocol Daemon).

A process of DCS 1122 controls delivery of stored documents etc. A process of OCS 1123 controls an operation panel which is used as an information transfer device between an operator or user and the control system in the fusion machine 1002. A process of the FCS 1124 provides an API for performing a facsimile transmission/reception utilizing PSTN or ISDN to/from the application layer 1111, registration/reference of various types of facsimile data managed in a memory provided for a backup purpose, a facsimile reading-in operation, facsimile reception and printing-out operation, and so forth.

A process of the ECS 1125 is of controlling an engine part, such as the monochrome laser printer 1301, color laser printer 1302 and hardware resources 1303. A process of the MCS 1126 is of a memory control such as acquisition/release of an image memory area, a use of an HDD area, compression/decompression of image data, etc. A process of the UCS 1127 performs management of user's personal information.

A process of the SCS 1128 is of an application management, an operation unit control, a system screen display, an LED display, a hardware resource management, an interruption application control, etc.

A process of the SRM 1129 is of performing a control of the system and a management of the hardware resources 1135 together with the SCS 1128. For example, the SRM 1129 performs arbitration and execution control according to acquisition requests coming from higher layers utilizing the hardware resources 1300 such as the monochrome laser printer 1301, color laser printer 1302 and so forth.

Specifically, the SRM 1129 determines whether or not the requested hardware resources 1300 are available or whether or not these hardware resources 1300 are already used by other requests, and, when they are available, it notifies that the requested hardware resources are available to the upper layers. Furthermore, the SRM 1129 receives acquisition requests from the upper layers, performs scheduling thereon for efficiently utilizing the hardware resources 1300, and also directly performs requested tasks (for example, paper feeding and image formation with the printer engine, memory acquisition, file creation, and so forth).

The handler layer 1133 includes a facsimile control unit handler (referred to as a FCUH) 1131 performing management of a facsimile control unit (referred to as an FCU, which will be described later), and an image memory handler (referred to as an IMH) 1132 which performs allocation of memory areas for respective processes, and a management of the thus-allocated memory areas.

The SRM 1130 and FCUH 1131 utilize an engine I/F 1134 which enables transmission of processing requests toward the hardware'resources 1300 through a previously defined function, and, thus, actually makes processing requests to the hardware resources 300.

By this configuration shown in FIG. 32, the fusion machine 1002 can manage, in centralization manner, operations required in common by respective applications in the platform 1135.

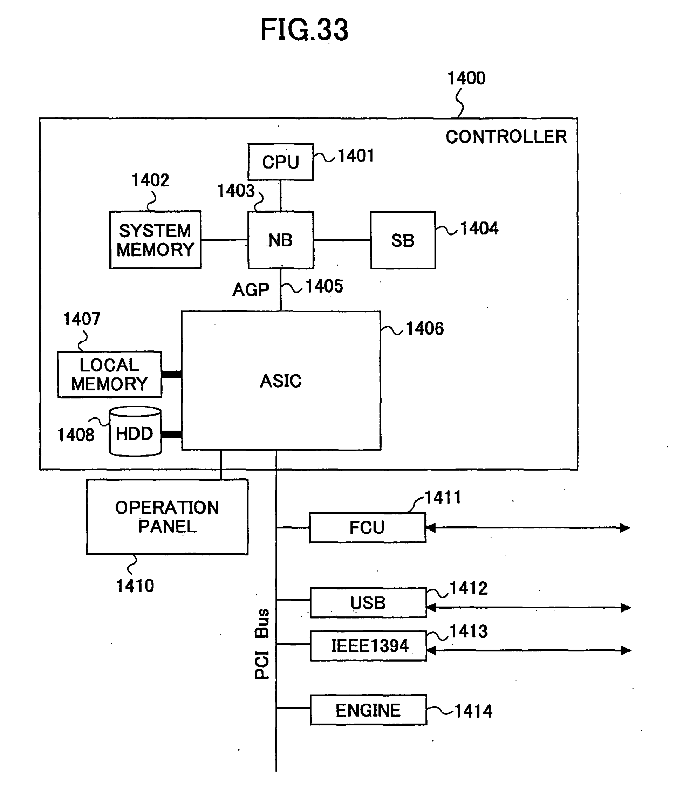

A hardware configuration of the fusion machine 1002 will now be described. FIG. 33 shows the hardware configuration of the above-described fusion machine 1002 in one embodiment of the present invention. The fusion machine 1002 includes a controller 1400, which actually performs various control operations in the fusion machine 1002 described above, the operation panel 1410, the FCU 1411, a USB device 1412, an IEEE 1394 device 1413 and the engine part 1414.

The controller 1400 includes a CPU 1401, a system memory 1402, a north bridge (NB) 1403, a south bridge (SB) 1404, an ASIC 1406, a local memory 1407 and a HDD 1408.

The operation-panel 1410 is connected to the ASIC 1406 of the controller 1400. The FCU 1411, USB device 1412, IEEE 1394 device 1413 and engine part 1412 are connected to the ASIC 1406 of the controller 1400 via a PCI bus.

In the controller 1400, the local memory 1407, HDD 1408, etc. are connected to the ASIC 1406, and the CPU 1401 and the ASIC 1406 are connected together via the NB 1403 of the CPU chip set. In the controller 1400, by connecting the CPU 1401 and the ASIC 1406 via the NB 1403, the controller 1400 is applicable to a case when the interface of the CPU 1401 is not opened to the public.

The ASIC 1406 and NB 1403 are connected not via a PCI bus but via an AGP (Accelerated Graphic Port) 1405. Thus, in order to perform an execution control on one or a plurality of processes provided by the applications 1111 and the platform 1135 of FIG. 32, a degradation in performance can be avoided by connecting the ASIC 1406 and the NB 1403 together not via a low-rate PCI bus but via the AGP 1405.

The CPU 1401 performs a control of the entire fusion machine 1002. The. CPU 1401 starts and executes the NCS 1121, DCS 1122, OCS 1123, FCS 1124, ECS 1125, MCS 1126, UCS 1127, SCS 1128, SRM 1129, FCUH 1131 and IMH 1132 as processes, respectively, on the OS, and, also, starts and executes the printer application 1101, copy application 1102, facsimile application 1103, scanner application 1104, Web page application 1105, WSF 1106 and SFs 1107 included in the application layer 1111.

The NB 1403 is a bridge connecting the CPU 1401, system memory 1402, SB 1404, and ASIC 1406. The system memory 1402 is a memory used as a drawing memory in the fusion machine 1002. The SB 1404 is a bridge connecting the NB 1403 with a ROM, the PCI bus and peripheral devices. The local memory 1407 is a memory used as a buffer for image copying, a code buffer, or so.

The ASIC 1406 is an IC including a hardware device for image processing, and used for an image processing purpose. The HDD 1408 is one example of a storage (secondary storage) used for storing image data, storing document data, storing various sorts of programs, storing font data, storing various data concerning forms, or so. The operation panel 1410 is an operation part accepting an input operation from a user, and also, performing a display to the user.

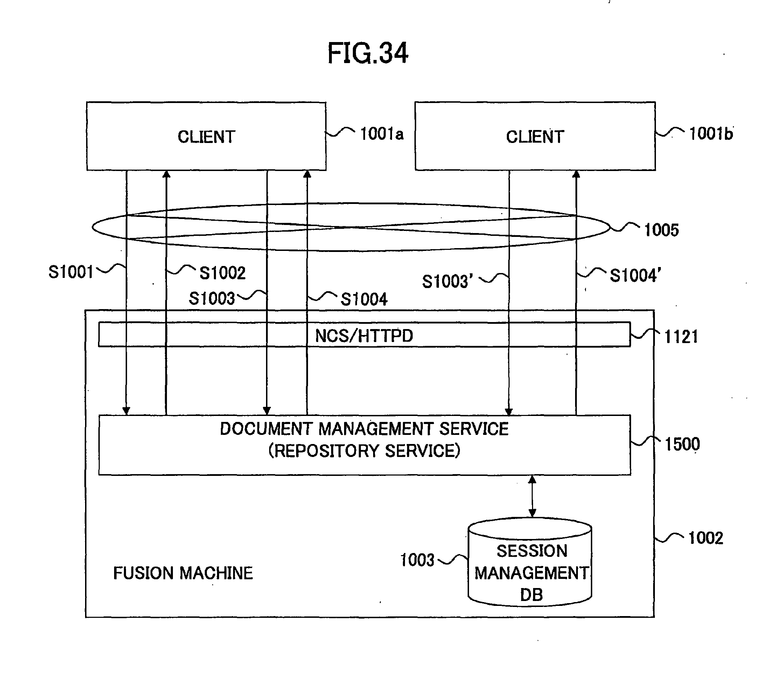

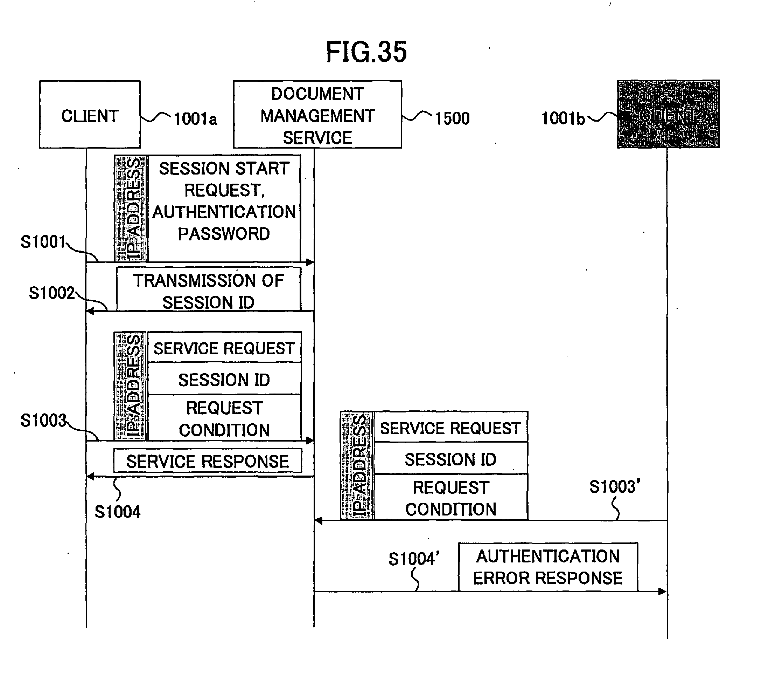

Service providing methods in the seventh through ninth embodiments of the present invention embodied by the fusion machine 1002 will now be described with reference to figures'. In the drawings referred to in the description which will now be made, some parts/components which are not needed for the description are omitted. FIG. 34 illustrates a service providing method in the seventh embodiment of the present invention. FIG. 35 shows a sequence diagram of the service providing method in the seventh embodiment.

FIGS. 34 and 35 show an example where a client 1001a connected with the fusion machine 1002 via a network 1005 obtains a document stored in the fusion machine 1002. In order to obtain a document stored in the fusion machine 1002, a user inputs an authentication password to the client 1001a, and then inputs instruction to cause the client 1001a to start a session.

In Step S1001, the client 1001a transmits a session start request, the authentication password and an IP address of the client 1001a to a document management service 1500 in the fusion machine 1002. This embodiment is an example in which the IP address is used as the client identification information.

After receiving the session start request, authentication password and IP address of the client 1001a via the HTTPD of the NCS 1121, the document management service 1500 performs password authentication with a use of the authentication password. When the password authentication is completed normally, the document management service 1500 establishes a session with the client 1001a, and produces a session ID of the session.

The document management service 1500 stores the produced session ID and the IP address of the client 1001a which made the session start request in a session management DB 1003 providing a connection therebetween as shown in FIG. 26.

In Step S1002 following Step S1001, the document management service 1500 transmits the thus-produced session ID to the client 1001a. After receiving the session ID, the user o the client 1001a inputs a request for a service from the client 1001a.

Upon receiving the requesting input from the user, the client 1001a performs Step S1003, and transmits to the document management service 1500 of the fusion machine 1002 the service request, a request condition, the session ID and the IP address of the client 1001a.

The document management service 1500 receives the service request, request condition, session ID and IP address of the client 1001a via the HTTPD of the NCS 1121, and performs processing of determining for the validity of the session ID. This validity determination for the session ID is performed by determining whether or not the received session ID and the IP address of the client 1001a which made the service request are provided with a connection as session management information in the session management DB 1003.

In this case, the document management service 1500 determines that the received session ID and the IP address of the client 1001a which made the service request are provided with the connection as session management information in the session management DB 1003, and updates the data item 'effective time limit' in the session management DB 1003 so as to extend the effective time limit of the session. Furthermore, when a document ID is included in the received request condition, the document management service 1500 determines whether or not the document ID has already passed authentication. After determining that a document ID which has not passes authentication is included in the request condition, the document management service 1500 performs password authentication on the document ID as is necessary.

Then, in Step S1004 following Step S1003, the document management service 1500 responds to the request from the client 1001a to provide the service since the validity determination results in success.

An example where a user of a client 1001b makes spoofing for the legitimate user of the client 1001a and requests a service from the fusion machine 1002 will now be described. For example, it is assumed that the user of the client 1001b furtively sees a service request, a request condition and a session ID being transmitted to the document management service 1500 of the fusion machine 1002 from the client 1001a.

In Step S1003', with a use of the thus-furtively-seen service request, request condition and session ID, the user of the client 1001b inputs an instruction for requesting a service from the client 1001b. The client 1001b transmits the service request, request condition and session ID furtively seen by the user to the document management service 1500 of the fusion machine 1002.

As the IP address of the client 1001b which is transmitted together with the service request, request condition and session ID from the client 1001b at the same time is a transmission source IP address included in an IP packet used for example, it cannot be changed voluntarily in general.

Upon receiving the service request, request condition, session ID and IP address of the client 1001b via the HTTPD of the NCS 1121, the document management service 1500 performs validity determination processing on the session ID thus received. In this determination, it is determined whether or not the received session ID and the IP address of the client 1001b which made the service request are provided with a connection as session management information in the session management DB 1003.

In this case, the document management service 1500 determines that the received session ID and the IP address of the client 1001b which made the service request are not provided with a connection as session management information in the session management DB 1003, and thus, performs Step S1004'. In this step, the document management service 1500 responds to the client 1001b with an authentication error message.

Thus, even when the user of the client 1001b furtively sees the session ID and requests a service from the fusion machine 1002 with a use of this session ID, the user of the client 1001b cannot obtain the service from the fusion machine 1002 since this session ID and the IP address of the client 1001b are not provided with a connection as session management information in the session management DB 1003.

Thus, according to the present invention, it is possible to avoid spoofing by the illegal client 1001b for the legitimate client 1001a so as to effectively avoid illegal usage of service.

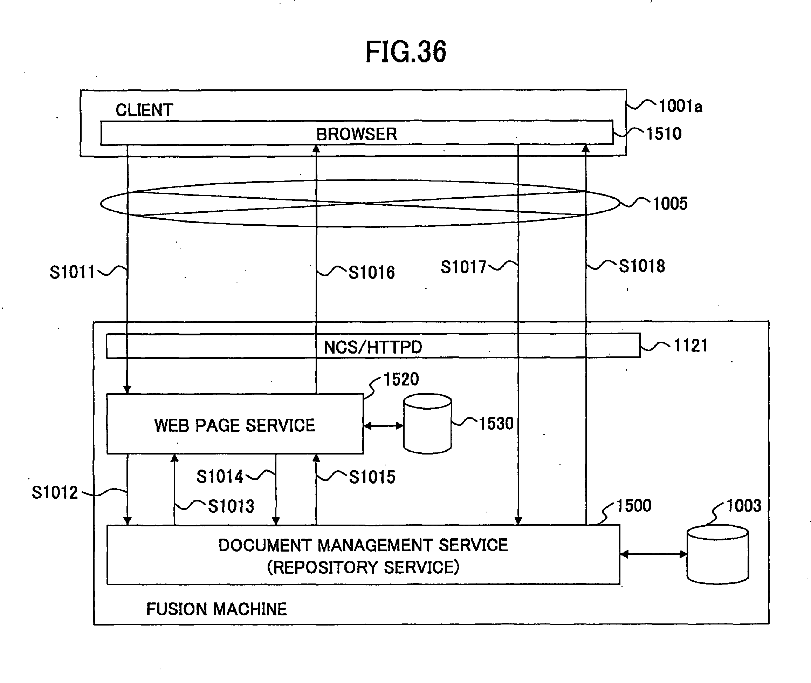

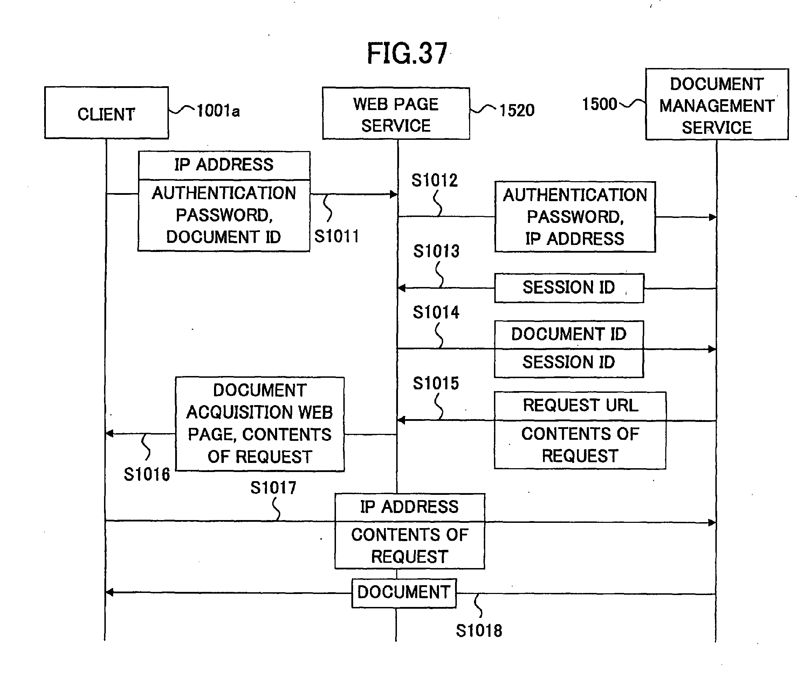

The eighth embodiment of the present invention will now be described. FIG. 36 illustrates a service providing method in the eighth embodiment. FIG. 37 shows a sequence diagram of the service providing method in the eighth embodiment.

FIGS. 36 and 37 shows an example in which a browser 1510 of a client 1001a connected with a fusion machine 1002 via a network 1005 obtains a document stored in the fusion machine 1002. In case of obtaining the document stored in the fusion machine 1002, a user inputs a document ID and an authentication.password to the browser 1510 of the client 1002, and then, inputs an instructions such as to cause the browser 1510 to start a session.

In Step S1011, the browser 1510 transmits the document ID, the authentication password and an IP address of the client 1001a to a Web page service 1520 of the fusion machine 1002. In this case, the IP address is used as the client identification information.

The Web page service 1520 receives the document ID, authentication password and the IP address of the client 1001a via the HTTPD of the NCS 1121, and then, performs Step S1012. In Step S1012, the Web page service 1520 transmits the authentication password and IP address received in Step S1011 to the document management service 1500.

The document management server 1500 uses the authentication password and IP address received from the Web page service 1520, and performs password authentication. When the password authentication is completed normally, the document management service 1500 establishes a session with the Web page service 1520, and produces a session ID of this session.

The document management service 1500 stores the produced session ID and the IP address of the client 1001a in a session management DB 1003 providing a connection therebetween, as shown in FIG. 26.

In Step S1013 following Step S1012, the document management service 1500 transmits the produced session ID to the Web page service 1520. In Step S1014 following Step S1013, the Web page service 1520 transmits the received session ID and the document ID received in Step S1011 to the document management service 1500.

In Step S1015 following Step s1014, the document management service 1500 transmits a request URL and the contents of request to the Web page server 1520. The request URL means a URL via which the browser 1510 of the client 1001a makes a request from the document management service 1500. The contents of request include the document ID and session ID received in Step S1014.

Upon receiving the request URL and contents of request, the Web page service 1520 produces a document acquisition Web page. The document acquisition Web page includes the contents of request received from the document management service 1500, and has a configuration to achieve a function of transmitting the contents of request from the browser 1510 of the client 1001a to the request URL. An example of the document acquisition Web page having such a configuration is disclosed by Japanese patent application No. 2002-236990, filed by the applicant of the present application.

In Step S1016 following Step S1015, the Web page service 1520 transmits the document acquisition Web page including the contents of request to the browser 1520 of the client 1001a. The Web page service 1520 manages in a unifying manner the session ID for each browser instead of the browser 1510 which cannot hold the session ID, in an HTTP session management DB 1530.

After the document management Web page is received by the browser 1510, the user inputs an instruction to the browser 1520 to request a service.

Upon receiving the request instruction from the user, the browser 1510 performs Step S1017, and transmits the contents of request and IP address of the client 1001a to the request URL with a use of the above-mentioned configuration of the document acquisition Web page to achieve the function of transmitting the contents of request to the request URL.

Upon receiving the contents of request and the IP address of the client 1001a via the HTTPD of the NCS 1121, the document management server 1500 performs validity determination processing on the session ID included in the received contents of request. In the validity determination processing, it is determined whether or not the received session ID and the IP address of the client 1001a which made the request are provided with a connection as session management information in the session management DB 1003.

In this case, the document management service 1500 determines that the received session ID and the IP address of the client 1001a which made the request are provided with the connection as session management information in the session management DB 1003 as it is stored therein as mentioned above, and thus, updates the data item 'effective time limit' in the session management DB 1003 so as to extend the effective time limit of the relevant session. Furthermore, when the request condition includes a document ID, the document management service 1500 determines whether the document ID has' passes authentication. When the document management service 1500 determines that the request condition includes the document ID which has not passed authentication, the document management service performs password authentication of the relevant document ID as is necessary.

In Step S1018 following Step S1019, the document management service 1500 transmits a document to the'browser 1520 of the client 1001a as a response to the request for service made by the client 1001a as the above-mentioned validity determination processing results in success.

Accordingly, even any user other than the user of the client 1001a who furtively sees the session ID, and requests a service from the fusion machine 1002 with a use of this session ID, this user cannot obtain the service from the fusion machine 1001 since the session ID and an IP address of the client of this user are not provided with a connection as the session management information in the session management DB 1003.

Thus, according to the present invention, by avoiding spoofing by an illegal client for the legitimate client 1001a, it is possible to effectively avoid illegal usage of service.

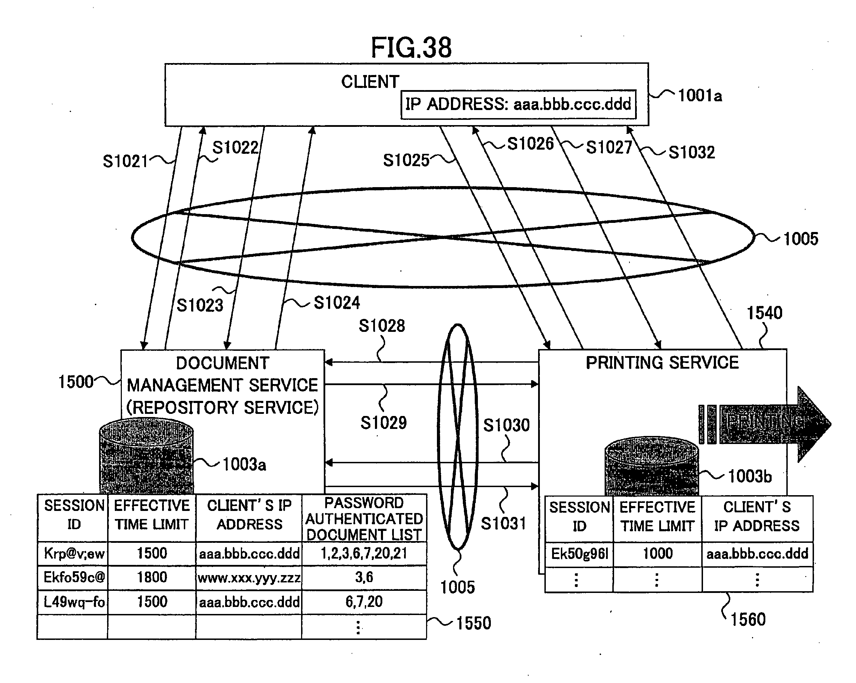

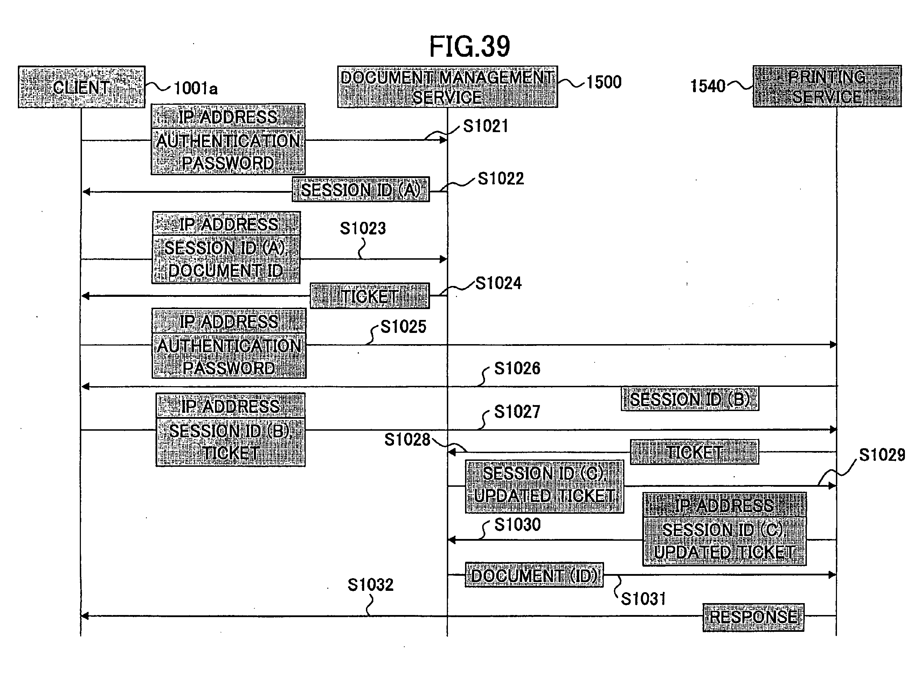

A ninth embodiment of the present invention will now be described. FIG. 38 illustrates a service providing method in the ninth embodiment of the present invention. FIG. 39 shows a sequence diagram of the service providing method in the ninth embodiment.

FIGS. 38 and 39 shows an example in which a client 1001a connected with a document management service 1500 and a printing service 1540 via a network 1005 causes a document managed by the document management service 1500 to be printed out by the printing service 1540. FIGS. 38 and 39 show the example assuming that the document management service 1500 and printing service 1540 are provided in respective separate fusion machines. However, these services 1500 and 1540 may be provided in a common fusion machine.

In order to print out a document managed by the document management service 1500, a user inputs an authentication password and then inputs an instruction to cause the client 1001a to start a session. In Step S1021, the client 1001a transmits the authentication password and an IP address of the client 1001a to the document management service 1500. This embodiment is an example which uses the IP address as the client identification information.

After receiving the authentication password and the IP address of the client 1001a, the document management service 1500 performs password authentication with a use of the received authentication password. When the password authentication is completed normally, the document management service 1500 establishes a session with the client 1001a and produces a session ID (A) of the session.

The document management service 1500 then stores session management information 1550 providing a connection between the produced session ID (A) and the IP address of the client 1001a in a session management DB 1003a.

In Step S1022 following Step S1021, the document management service 1500 transmits the produced session ID (A) to the client 1001a. The user then inputs an instruction to the client 1001a for issuance of a ticket after inputting a document ID.

In Step S1023, the client 1001a transmits the document ID, the session ID (A) received in Step S1022 and the IP address of the client 1001a to the document management service 1500.

After receiving the document ID, the session ID (A) and the IP address of the client 1001a, the document management service 1500 performs validity determining processing on the session ID (A). The validity determination is performed by determining whether or not the received session ID and the IP address of the client 1001a which made the request for service are provided with a connection as session management information in the session management DB 1003a.

In this case, the document management service 1500 determines that the received session ID and the IP address of the client 1001a which made the request for service are provided with the connection as the session management information 1550 in the session management DB 1003a as it is stored therein as mentioned above, and updates the data item 'effective time limit' in the document management DB 1003a so as to extend the effective time limit for the relevant session. Furthermore, when the request condition includes the document ID, the document management service 1500 determines whether or not the document ID has passes authentication. When determining that the request condition includes a document ID not having passes authentication, the document management service performs authentication on the document ID as is necessary.

In Step S1024 following Step S1023, the document management service 1500 produces a ticket requested by the client 1001a, and transmits the ticket to the client 1001a. The ticket is an evidence which indicates that usage of the document management service 1500 is permitted. One example of such a ticket is disclosed by Japanese patent application No. 2002-76865 filed by the applicant same as that of the present application.

In Step S1025, the client 1001a transmits to the printing service 1540 the authentication password and the IP address of the client 1001a. The printing service 1540 receives the authentication password and the IP address of the client 1001a and then, performs password authentication with a use of the received authentication password. When the password authentication is completed normally, the printing service 1540 establishes a session with the client 1001a, and produces a session ID (B) of the session.

The printing service 1540 stores session management information 1560 providing a connection between the produced session ID (B) and the IP address of the client 1001a in the session management DB 1003b.

In Step S1026 following Step S1025, the printing service 1540 transmits the produced session ID (B) to the client 1001a. The user then inputs an instruction to the client 1001a for printing out of the document.

In Step S1027, the client 1001a transmits to the printing service 1540 the ticket received in Step S1024, the session ID (B) received in Step S1026 and the IP address of the client 1001a.

Upon receiving the ticket, session ID (B) and IP address, the printing service 1540 performs validity determination processing on the session ID (B). In the validity determination processing, it is determined whether or not the received session ID (B) and the IP address of the client 1001a which made the request for service are provided with a connection as session management information 1560 in the session management DB 1003b.

In this case, the printing service 1540. determines that the received session ID (B) and the IP address of the client 1001a which made the request for service are provided with the connection as the session management information 1560 in the session management DB 1003b as it is stored therein as mentioned above, and updates the data item 'effective time limit' in the session management DB 1003b so as to extend the effective time limit for the relevant session. In Step S1028 following Step S1027, the printing service 1540 transmits the ticket received from the client 1001a to the document management-service 1500 at this time.

Upon receiving the ticket, the document management service 1500 performs validity determination processing on the ticket. In this case, the document management service 1500 determines that the received ticket is valid since this ticket was issued originally by itself in Step S1024. In Step S1029 following Step S1028, the document management service 1500 establishes a session with the printing service 1540, and produces a session ID (C) of the session. The document management service 1500 stores session management information 1550 providing a connection between the produced session ID (C) and an IP address of the printing service 1540 in the session management DB 1003a. Further, the document management service 1500 updates the validity of the ticket received in Step S1028.

In Step S1029 following Step S1028, the document management service 1500 transmits the produced session ID (C) and the updated ticket to the printing service 1540.

In Step S1030 following Step S1029, the printing service 1540 transmits the session ID (C) received in Step S1029, the updated ticket and the IP address of the printing service 1540 to the document management service 1500.

Upon receiving the session ID (C) and the updated ticket, the document management service 1500 performs validity determination processing on the session ID (C). In this validity determination processing on the session ID (C), it is determined whether or not the received session ID (C) and the IP address of the printing service 1540 which made the request for service are provided with a connection as session management information 1550 in the session management DB 1003a.

In this case, the document management service 1500 determines that the received session ID (C) and the IP address of the printing service 1540 which made the request for service are provided with the connection as the session management information 1550 in the session management DB 1003a as it is stored therein as mentioned above, and updates the data item 'effective time limit' in the session management DB 1003a so as to extend the effective time limit for the relevant session. Then, in step S1031 following Step S1030, the document management service 1500 transmits the document or the document ID in response to the request for service from the printing service 1540.

The printing service 1540 uses the thus-received document or document ID for printing out the document. In Step S1032 following Step S1031, the printing service 1540 responds to the request for service from the client 1001a by transmitting a result of the printing-out process thus performed thereby on the document or the document ID.

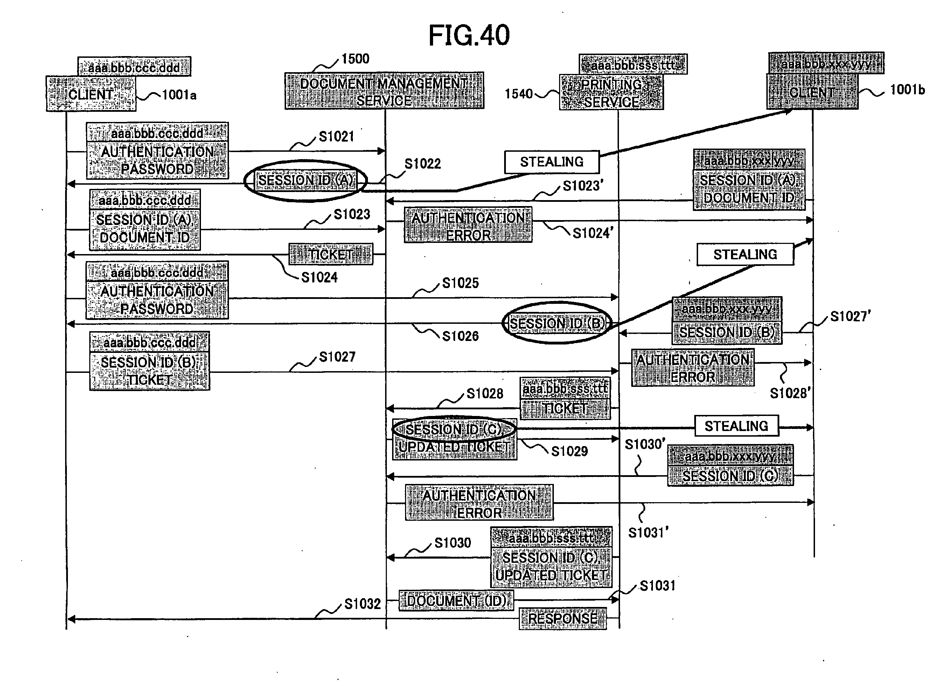

FIG. 40 shows a sequence diagram for an example where an illegal user performs spoofing and requests a service from the document management service 1500 and printing service 1540. In the sequence diagram in FIG. 40, same reference numerals are given to the same steps as those in the sequence diagram of FIG. 39.

In Steps S1023', S1027' and S1030', with a use of the session ID (A), session ID (B) or session ID (C) illegally obtained by means of furtive glance or so, the client 1001b illegally requests a service from the document management service 1500 or printing service 1540.

However, in the validity determination processing performed on the session ID by th document management service 1500 or printing service 1540, it is determined that the received session ID (A), session ID (B) or session ID (C) and the IP address of the client 1001b which made the request for service at this time are not provided with a connection as the session management information in the session management DB. Accordingly, the document management service 1500 or printing service 1540 makes a response with an authentication error message in Step S1024', S1028' or S1031'.

Thus, even when the user of the client 1001b furtively sees the session ID, and makes a request to the document management service 1500 or printing service 1540 with a use of the thus-obtained session ID, the user of the client 1001b cannot finally receive the service therefrom since the session ID and the IP address of the client 1001b are not provided with a connection as the session management information in the session management DB 1001a or 1003b.

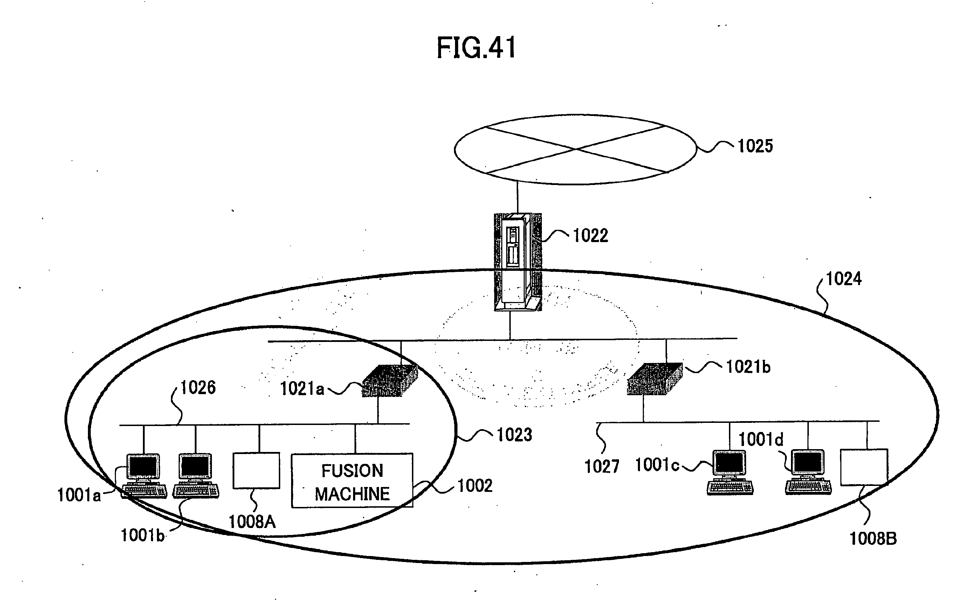

FIG. 41 shows an example of a configuration in which the above-mentioned limitation (described above with reference to FIGS. 29 and 30) provided in the service according to the matter as to which range a client is connected to the network with respect to the fusion machine 1002 is controllable in various manners. In the configuration shown in FIG. 41, authentication servers A and B 1008A and 1008B are provided in addition to the configuration shown in FIG. 29. By these authentication servers, the above-mentioned limitation on the service may be controlled by the following manners:
i) Even a client which is subject to the limitation in requesting a service from the fusion machine 1002 due to the range in which the client exits with respective to the fusion machine 1002, the limitation is lifted when the client makes a session start request with an indication of a predetermined effective password;
ii) Even a client which is subject to the limitation in requesting a service from the fusion machine 1002 due to the range in which the client exits with respective to the fusion machine 1002, the limitation is lifted when the client makes a session start request with an indication of a combination of a user name and a predetermined effective password;
iii) Even a client which is subject to the limitation in requesting a service from the fusion machine 1002 due to the range in which the client exits with respective to the fusion machine 1002, the limitation is lifted when the client makes a session start request with an indication of a predetermined authentication ticket or an URL of a server which issued the authentication ticket or both;
iv) Even a client which is subject to the limitation in requesting a service from the fusion machine 1002 due to the range in which the client exits with respective to the fusion machine 1002, the limitation is lifted when the client makes a session start request with an indication of an URL of a server which issued the authentication ticket and exits in the same range as that of the client or exists in the same range as that of the fusion machine 1002; and
v) Even a client which is subject to the limitation in requesting a service from the fusion machine 1002 due to the range in which the client exits with respective to the fusion machine 1002, the limitation is lifted when the client accesses the fusion machine 1002 via TLS or SSL.

Any combination of the above-mentioned manners may also be applied.

Thus, according to the present invention, by avoiding spoofing by the illegal client 1001b for the legitimate client 1001a, it is possible to effectively avoid illegal usage of service.

Further, the present invention is not limited to the above-described embodiments, and variations and modifications may be made without departing from the basic concept of the present invention.

The present application is based on Japanese priority applications Nos. 2002-378302 and 2003-002514, filed on December 26, 2003 and January 8, 2003, the entire contents of which are hereby incorporated by reference.

## Claims

1. An information providing apparatus (2) for providing predetermined information to a client (1) in response to a request therefrom, the client being operated by a user, the apparatus comprising:
an information storage part (14) for storing predetermined information identified by a predetermined information identifier;
a network service providing part (13) for receiving a request (S1) for predetermined information from the client, transmitting to the client a usage authentication information identifier (S8) in response to the request, receiving the usage authentication information identifier and transmitting the predetermined information to the client in response to the usage authentication information identifier; and
a usage management part (16) for storing information relating the usage authentication information identifier to the predetermined information identifier of the requested predetermined information; wherein:
the network service providing part (13) is further arranged to receive a client identification with the usage authentication information identifier and, if the client identification and the usage authentication information identifier received together are connected in the usage management part (16), to transmit the predetermined information to the client indicated by the client identification.

2. An information providing apparatus according to claim 1 wherein the client identification is an IP address or a MAC address.

3. An information providing apparatus according to claim 1 or 2, further comprising an effective time limit management part (15) for managing an effective time limit of the usage authentication information, and for invalidating said usage authentication information for which the effective time limit has expired.

4. An information providing apparatus according to any one of the preceding claims
wherein the information providing part (14) is further adapted to invalidate the usage authentication information identifier after having provided the corresponding predetermined information.

5. An information providing method for providing predetermined information to a client
(1) in response to a request therefrom, the client being operated by a user, the method comprising:
storing predetermined information identified by a predetermined information identifier;
receiving (S1) a request for predetermined information from the client;
transmitting (S8) to the client a usage authentication information identifier in response to the request;
receiving the usage authentication information identifier;
transmitting the predetermined information to the client in response to the usage authentication information identifier; and
storing information relating the usage authentication information identifier to the predetermined information identifier of the requested predetermined information;
receiving in the request a client identification; and
storing in relation to the usage authentication information identifier, the client identification received in the request;
wherein transmitting the predetermined information to the client comprises determining whether a client identification received with the usage authentication information identifier is connected in the stored information with the usage authentication information identifier and if so transmitting the predetermined information to a client indicated by the stored client identification.

6. An information providing method according to claim 5 wherein the client identification is an IP address or a MAC address.

7. An information providing method according to claim 5 or 6 further comprising:
managing an effective time limit of the usage authentication information, and
invalidating said usage authentication information for which the effective time limit has expired.

8. An information providing method according to any one of claims 5 to 7 further comprising invalidating the usage authentication information identifier after having provided the corresponding predetermined information.
